# EUROPÄISCHE PATENTSCHRIFT

(11) **EP 2 408 671 B1**
(45) Veröffentlichungstag und Bekanntmachung des Hinweises auf die Patenterteilung: **08.05.2013**
(21) Anmeldenummer: 10708126.7
(22) Anmeldetag: 05.03.2010
(51) Int. Cl.: F28F 13/00, F28F 7/02

(54) **FLUGZEUGKÜHLSYSTEM UND VERFAHREN ZUM BETREIBEN EINES FLUGZEUGKÜHLSYSTEMS**
AIRCRAFT COOLING SYSTEM AND METHOD FOR OPERATING AN AIRCRAFT COOLING SYSTEM
SYSTEME DE REFROIDISSEMENT D'AVION ET PROCEDE POUR FAIRE FONCTIONNER UN SYSTEME DE REFROIDISSEMENT D'AVION

(30) Priorität: 16.03.2009 DE 102009013159; 16.03.2009 US 160431 P
(43) Veröffentlichungstag der Anmeldung: 25.01.2012
(73) Patentinhaber: Airbus Operations GmbH, 21129 Hamburg (DE)
(72) Erfinder: BAUMGARDT, Torben, 21684 Stade (DE); STOLTE, Ralf-Henning, 22525 Hamburg (DE); WEBER, Carsten, 28205 Bremen (DE); REYNAUD, Remy, 28277 Bremen (DE); MUELLER, Christian, 20097 Hamburg (DE)
(74) Vertreter: Schicker, Silvia
(86) Internationale Anmeldenummer: PCT/EP2010/001391
(87) Internationale Veröffentlichungsnummer: WO 2010/105744

(56) Entgegenhaltungen:
- EP-A2- 1 840 493
- DE-A1- 3 609 541
- GB-A- 228 110
- US-A- 3 089 318
- US-A- 4 180 290
- US-A- 4 739 823

## Beschreibung

Die Erfindung betrifft ein Flugzeugkühlstem, das beispielsweise zur Kühlung eines an Bord eines Flugzeugs eingesetzten Brennstoffzellensystems geeignet ist, sowie ein Verfahren zum Betreiben eines derartigen Flugzeugkühlsystems.

GB 228,110A offenbart ein Flugzeugkühlsystem mit allen Merkmalen des Oberbegriffs des Anspruchs und des Verfahrensanpruch 10.

Brennstoffzellensysteme ermöglichen es, emissionsarm und mit einem hohen Wirkungsgrad elektrischen Strom zu erzeugen. Daher gibt es gegenwärtig Bestrebungen, Brennstoffzellensysteme in verschiedenen mobilen Anwendungen, wie z.B. in der Automobiltechnik oder in der Luftfahrt, zur Erzeugung elektrischer Energie heranzuziehen. Beispielsweise ist es denkbar, in einem Flugzeug die derzeit zur Bordstromversorgung eingesetzten, von den Haupttriebwerken oder dem Hilfstriebwerk (Auxiliary Power Unit, APU) angetriebenen Generatoren durch ein Brennstoffzellensystem zu ersetzen. Darüber hinaus könnte ein Brennstoffzellensystem auch zur Notstromversorgung des Flugzeugs verwendet werden und die bisher als Notstromaggregat eingesetzte Ram Air Turbine (RAT) ersetzen.

Neben elektrischer Energie erzeugt eine Brennstoffzelle im Betrieb thermische Energie, die mit Hilfe eines Kühlsystems von der Brennstoffzelle abgeführt werden muss, um eine Überhitzung der Brennstoffzelle zu verhindern. Ein in einem Flugzeug, beispielsweise zur Bordstromversorgung, eingesetztes Brennstoffzellensystem muss so ausgelegt sein, dass es dazu in der Lage ist, einen hohen Bedarf an elektrischer Energie zu decken. Eine hinsichtlich der Erzeugung elektrischer Energie leistungsstarke Brennstoffzelle generiert jedoch auch eine große Menge thermischer Energie und hat daher einen hohen Kühlbedarf. Darüber hinaus ist an Bord eines Flugzeugs eine Vielzahl weiterer technischer Einrichtungen vorgesehen, die Wärme erzeugen und die zur Gewährleistung einer sicheren Funktionsweise gekühlt werden müssen. Zu diesen technischen Einrichtungen gehören beispielsweise die Klimaaggregate oder die elektronischen Steuerkomponenten des Flugzeugs.

Gegenwärtig eingesetzte Flugzeugkühlsysteme umfassen üblicherweise im Bereich der Flugzeugaußenhaut vorgesehene Lufteinlassöffnungen, die beispielsweise als Staulufteinlässe ausgebildet sein können und dazu dienen Umgebungsluft als Kühlmittel in das Flugzeugkühlsystem zu fördern. Durch die Aufnahme von Wärme von zu kühlenden Einrichtungen an Bord des Flugzeugs erwärmte Kühlluft wird in der Regel durch ebenfalls im Bereich der Flugzeugaußenhaut vorgesehene Luftauslassöffnungen in die Umgebung zurückgeführt. Die in der Flugzeugaußenhaut ausgebildeten Lufteinlass- und Luftauslassöffnungen erhöhen jedoch den Luftwiderstand und damit den Treibstoffverbrauch des Flugzeugs. Darüber hinaus weisen über Staulufteinlässe mit Kühlluft versorgte Flugzeugkühlsysteme hohe Druckverluste, eine unter anderem durch den maximalen Zuluftvolumenstrom durch die Staulufteinlässe begrenzte Kühlleistung sowie ein relativ hohes Gewicht auf.

Der vorliegenden Erfindung liegt die Aufgabe zugrunde, ein Flugzeugkühlstem mit einem geeigneten, kompakten Kühler bereitzustellen, das eine leichtgewichtige Gestaltung sowie einen energieeffizienten Betrieb des auch zur Abfuhr großer Wärmelasten von einer wärmeerzeugenden Einrichtung, beispielsweise einem Brennstoffzellensystem, an Bord eines Flugzeugs vorgesehenen Flugzeugkühl-systems ermöglicht. Ferner liegt der Erfindung die Aufgabe zugrunde, ein Verfahren zum Betreiben eines derartigen Flugzeugkühlsystems anzugeben.

Diese Aufgabe wird durch ein Flugzeugkühlstem mit den Merkmalen des Anspruchs 1 und ein Verfahren zum Betreiben eines Flugzeugkühlsystems mit den Merkmalen des Anspruchs 10 gelöst.

Der Kühler des erfindungsgemäβen Flugzeugkühlsystem umfasst einen Matrixkörper, in dem eine Mehrzahl von Kühlmittelkanälen ausgebildet ist, die sich von einer ersten Oberfläche des Matrixkörpers zu einer zweiten Oberfläche des Matrixkörpers erstrecken, so dass der Matrixkörper von einem Kühlmittel durchströmbar ist. Die erste Oberfläche des Matrixkörpers liegt der zweiten Oberfläche des Matrixkörpers gegenüber. Die erste Oberfläche des Matrixkörpers bildet eine Außenfläche des Matrixkörpers, während die zweite Oberfläche des Matrixkörpers eine Innenfläche des Matrixkörpers bildet Die Kühlmittelkanäle können jede beliebige Form aufweisen. Wesentlich ist lediglich, dass sie eine Kühlmittelströmung durch den Matrixkörper ermöglichen. Grundsätzlich kann der Matrixkörper des erfindungsgemäßen Kühlers so gestaltet sein, dass er von einem beliebigen Kühlmittel durchströmbar ist. Vorzugsweise kommt der erfindungsgemäße Kühler jedoch in einem Flugzeugkühlsystem zum Einsatz, in dem Luft, vorzugsweise Umgebungsluft, als Kühlmittel verwendet wird. Der Matrixkörper und insbesondere die in dem Matrixkörper ausgebildeten Kühlmittelkanäle sind daher vorzugsweise so gestaltet, dass der Matrixkörper ungehindert von Luft durchströmbar ist.

Der Matrixkörper des Kühlers des erfindungsgemaβen Flugzeugkühlsystem kann lediglich mit Kühlmittelkanälen versehen sein, durch die ein Kühlmittel einer wärmeerzeugenden Einrichtung an Bord des Flugzeugs zur direkten Kühlung zugeführt werden kann. Alternativ dazu kann der Kühler jedoch auch in Form eines Wärmeübertragers ausgebildet sein. In dem Matrixkörper kann dann neben einer Mehrzahl von Kühlmittelkanälen auch eine Mehrzahl von Wärmeträgermedienkanälen ausgebildet sein, die im Betrieb des Kühlers von einem zu kühlenden Wärmeträgermedium durchströmt werden können. Wenn Kühlmittel durch die Kühlmittelkanäle geführt wird, kann die in dem Kühlmittel enthaltene Kühlenergie auf das zu kühlende Wärmeträgermedium übertragen und das Wärmeträgermedium dadurch gekühlt werden. Schließlich ist es denkbar, den des erfindungsgemäβen FlugzeugKühlsystems sowohl als Wärmeübertrager als auch zur Zufuhr von Kühlmittel zur direkten Kühlung einer wärmeerzeugenden Einrichtung an Bord des Flugzeugs zu nutzen. Das Kühlmittel kann dann beim Durchströmen des Matrixkörpers Kühlenergie an ein Wärmeträgermedium abgeben und zusätzlich, vor oder nach dem Durchströmen des Matrixkörpers, zur direkten Kühlung einer wärmeerzeugenden Komponente oder eines wärmeerzeugenden Systems an Bord des Flugzeugs genutzt werden.

Der Matrixkörper des des erfindungsgemäβen FlugzeugKühlsystems Kühlers ist dazu eingerichtet, einen Abschnitt einer Flugzeugaußenhaut zu bilden. Mit anderen Worten, der Matrixkörper des Kühlers des erfindungsgemäβen FlugzeugKühlsystems eist eine Form, Größe sowie strukturelle Eigenschaften auf, die es ermöglichen, den Matrixkörper als Flugzeugaußenhautabschnitt einzusetzen. Ferner besteht der Matrixkörper des Kühlers des erfindungsgemäβen FlugzeugKühlsystems aus einem Material, das den Einsatz des Matrixkörpers als Flugzeugaußenhautabschnitt erlaubt. Beispielsweise kann der Matrixkörper aus einem Metall oder einem Kunststoffmaterial, insbesondere einem faserverstärkten Kunststoffmaterial bestehen.

Der Kühler des erfindungsgemäβen FlugzeugKühlsystems hat den Vorteil, dass der Matrixkörper ein ohnehin an Bord des Flugzeugs vorhandenes Bauteil, nämlich einen Abschnitt der Flugzeugaußenhaut ersetzt. Der Matrixkörper des Kühlers benötigt somit keinen bzw., je nach Dicke des Matrixkörpers, nur geringen zusätzlichen Einbauraum. Darüber hinaus verursacht der Kühler des erfindungsgemäβen FlugzeugKühlsystems ein vergleichsweise geringes Mehrgewicht. Schließlich erlaubt der Kühler des erfindungsgemäβen FlugzeugKühlsystems im Vergleich zu konventionellen Systemen eine Vervielfachung der von Kühlmittel durchströmbaren Fläche. Dadurch liefert der Kühler eine sehr hohe Kühlleistung und verursacht darüber hinaus nur sehr geringe Druckverluste. Der kühler kann daher in besonders vorteilhafter Weise an Bord eines Flugzeugs dazu verwendet werden, hocheffizient große Wärmelasten von einer wärmeerzeugenden Einrichtung, wie z.B. einem Brennstoffzellensystem abzuführen.

Vorzugsweise umfasst der Matrixkörper des Kühlers des erfindungsgemäβen Flugzeugkühlsystems eine Mehrzahl von Lamellen, die die in dem Matrixkörper ausgebildeten Kühlmittelkanäle begrenzen. Ein mit einer Lamellenstruktur versehener Matrixkörper ist ungehindert und mit besonders geringen Druckverlusten von einem Kühlmittel, insbesondere Luft durchströmbar. Die in dem Matrixkörper ausgebildete Lamellenstruktur kann an die Anordnung des Kühlers in der Außenhaut des Flugzeugs angepasst sein. Beispielsweise kann die Lamellenstruktur so geformt sein, dass sie in Abhängigkeit der beispielsweise im Flugbetrieb des Flugzeugs vorherrschenden Luftströmung im Bereich des Kühlers eine optimierte Durchströmung des Matrixkörpers ermöglicht. Die Lamellenstruktur des Matrixkörpers kann durch einzelne miteinander verbundene plättchenförmige Lamellen realisiert werden. Alternativ dazu ist es jedoch auch denkbar, den Matrixkörper aus einem schaumartigen Material herzustellen, das die geforderten Durchströmungseigenschaften aufweist.

Die erste Oberfläche des Matrixkörpers, ist vorzugsweise dazu eingerichtet, im in einem Flugzeug montierten Zustand des Kühlers eine Außenfläche der Flugzeugaußenhaut zu bilden und weist vorzugsweise eine Struktur auf, die geeignet ist, im Flugbetrieb des Flugzeugs, wenn die erste Matrixkörperoberfläche von Luft überströmt wird, den Reibungswiderstand der ersten Matrixkörperoberfläche zu verringern. Wenn der Matrixkörper eine Lamellenstruktur aufweist, können die Lamellen beispielsweise im Bereich der ersten Matrixkörperoberfläche scharfkantige feine Rillen bilden, die parallel zu Strömungslinien der die erste Matrixkörperoberfläche im Flugbetrieb des Flugzeugs überströmenden Luftströmung ausgerichtet sind. Eine derartige Oberflächenstruktur bewirkt einen sogenannten "Haihauteffekt", d.h. sie bewirkt eine Verringerung des Reibungswiderstands der ersten Matrixkörperoberfläche. Der Matrixkörper des Kühlers des erfindungsgemäβen Flugzeugkühlsystems kann folglich nicht nur so gestaltet werden, dass er im Vergleich zu einer "glatten" Flugzeugaußenhaut keinen erhöhten Reibungswiderstand und damit einen erhöhten Treibstoffverbrauch des Flugzeugs zur Folge hat, sondern kann sogar mit Oberflächeneigenschaften versehen werden, die eine reibungswiderstandsvermindernde Wirkung des Matrixkörpers ermöglichen.

Der Matrixkörper des Kühlers des erfindungemäβen FlugzeugKühlsystems kann in Richtung der Kühlmittelströmung durch die in dem Matrixkörper ausgebildeten Kühlmittelkanäle mehrschichtig aufgebaut sein. Beispielsweise kann der Matrixkörper einen an die erste Matrixkörperoberfläche angrenzenden äußeren Abschnitt, einen an die zweite Matrixkörperoberfläche angrenzenden inneren Abschnitt sowie einen zwischen dem äußeren und dem inneren Abschnitt angeordneten mittleren Abschnitt umfassen. Die verschiedenen Abschnitte des Matrixkörpers können, falls gewünscht oder erforderlich, mit unterschiedlich gestalteten Kühlmittelkanälen und/oder unterschiedlich gestalteten Wärmeträgermedienkanälen versehen sein, so dass sie unterschiedliche Durchströmungseigenschaften aufweisen. Es ist jedoch auch denkbar, den Matrixkörper zwar mehrschichtig, d.h. mit mehreren von einem Kühlmittel und/oder einem Wärmeträgermedium durchströmbaren Abschnitten aufzubauen, diese Abschnitte aber mit gleichen Kühlmittelkanalstrukturen und/oder Wärmeträgermedienkanalstrukturen zu versehen. Der Matrixkörper weist dann trotz seines mehrschichtigen Aufbaus in allen Abschnitten gleiche Durchströmungseigenschaften auf.

Die verschiedenen Abschnitte des Matrixkörpers können dazu dienen, verschiedene wärmeerzeugende Einrichtungen an Bord des Flugzeugs mit Kühlenergie zu versorgen. Vorzugsweise ist derjenige Abschnitt des Matrixkörpers, der im Betrieb des Kühlers als erster Abschnitt von dem Kühlmittel durchströmt wird, einer wärmeerzeugenden Einrichtung an Bord des Flugzeugs zugeordnet, die einen vergleichsweise hohen Kühlleistungsbedarf hat. Abschnitte des Matrixkörpers, die im Betrieb des Kühlers von Kühlmittel durchströmt werden, das bereits durch andere Abschnitte des Matrixkörpers geleitet wurde und dabei Kühlenergie abgegeben hat, sind dagegen vorzugsweise wärmeerzeugenden Einrichtungen an Bord des Flugzeugs zugeordnet, die einen geringeren Kühlleistungsbedarf haben, d.h. auch durch Kühlmittel ausreichend gekühlt werden können, das bereits einen Teil seiner Kühlenergie abgegeben hat.

Grundsätzlich kann der Kühler des erfindungemäβen FlugzeugKühlsystems so gestaltet sein, dass sein Matrixkörper jeden beliebigen Abschnitt der Flugzeugaußenhaut bilden kann. Hierzu ist es lediglich erforderlich, den Matrixkörper des Kühlers des erfindungemäβen FlugzeugKühlsystems mit den Konturen und Krümmungsradien zu versehen, die notwendig sind, um den Matrixkörper an die Rumpfgeometrie des Flugzeugs anzupassen. Vorzugsweise ist der Matrixkörper des Kühlers des erfindungemäβen FlugzeugKühlsystems jedoch dazu eingerichtet, einen im > Bereich eines Hecks oder einer Belly Fairing des Flugzeugs angeordneten Flugzeugaußenhautabschnitt zu bilden. Wenn der Matrixkörper des Kühlers im Bereich des Hecks oder der Belly Fairing des Flugzeugs positioniert ist, ist er verhältnismäßig gut vor äußeren Einflüssen, wie z.B. Vogelschlag, Eisschlag oder Beschädigungen durch Triebwerksteile oder andere Objekte geschützt. Darüber hinaus kann ein im Bereich des Hecks oder der Belly Fairing des Flugzeugs angeordneter Kühler in besonders vorteilhafter Weise dazu genutzt werden, in diesen Bereichen des Flugzeugs angeordnete wärmeerzeugende Komponenten mit Kühlenergie zu versorgen, da in diesem Fall auf aufwändige und schwergewichtige Leitungssysteme zumindest weitgehend verzichtet werden kann. Darüber hinaus stellen sich im Flugbetrieb des Flugzeugs im Bereich des Hecks und der Belly Fairing Druckverhältnisse ein, die die Durchströmung der in dem Matrixkörper des Kühlers ausgebildeten Kühlmittelkanäle erleichtern.

In einer bevorzugten Ausführungsform desn Kühlers des erfindungsgemäβen Flugzeugkühlsystems kann der Matrixkörper des Kühlers dazu eingerichtet sein, einen zu einem Heckspiegel benachbarten Flugzeugaußenhautabschnitt zu bilden. Beispielsweise kann der Matrixkörper so geformt und dimensioniert sein, dass der gesamte zu dem Heckspiegel benachbarte Flugzeugaußenhautabschnitt durch den Matrixkörper gebildet wird. Der Matrixkörper weist dann vorzugsweise die Form eines Hohlkegelstumpfs auf. Falls gewünscht oder erforderlich, kann der Matrixkörper jedoch auch so geformt sein, dass er dazu eingerichtet ist, lediglich einen Teilbereich des zu dem Heckspiegel des Flugzeugs benachbarten Flugzeugaußenhautabschnitts zu bilden. Vorzugsweise weist der Matrixkörper eine derartige Form und Größe auf, dass er dazu geeignet ist, einen unteren oder einen oberen Bereich des zu dem Heckspiegel benachbarten Flugzeugaußenhautabschnitts zu bilden. Der Matrixkörper kann dann beispielsweise die Form eines halben Hohlkegelstumpfs aufweisen.

Der Kühler des erfindungsgemäβen Flugzeugkühlsystems kann ferner eine Mehrzahl von Rippen umfassen, die sich von der ersten Oberfläche des Matrixkörpers erstrecken, welche dazu eingerichtet ist, im in einem Flugzeug montierten Zustand des Kühlers eine Außenfläche der Flugzeugaußenhaut zu bilden. Die Rippen sind vorzugsweise dazu eingerichtet, als Strömungsleitbleche zu wirken, d.h. eine die erste Matrixkörperoberfläche beispielsweise im Flugbetrieb des Flugzeugs überströmende Luftströmung in einer gewünschten Richtung über die erste Matrixkörperoberfläche zu leiten. Die Anordnung von Rippen auf der ersten Matrixkörperoberfläche ist insbesondere dann sinnvoll, wenn der Kühler des erfindungsgemäβen Flugzeugkühlsystems, wie später noch näher erläutert werden wird, zumindest in bestimmten Betriebsphasen in einem Umströmungsbetrieb betrieben werden soll, bei dem das Kühlmittel nicht durch die in dem Matrixkörper ausgebildeten Kühlmittelkanäle geleitet, sondern über die erste Matrixkörperoberfläche geführt wird. Ein weiterer Vorteil der Ausgestaltung des erfindungsgemäßen Kühlers mit einer Mehrzahl von sich von der ersten Matrixkörperoberfläche erstreckenden Rippen besteht darin, dass die Rippen den Matrixkörper und insbesondere die erste Matrixkörperoberfläche vor äußeren Einflüssen schützen.

Um den durch die Rippen im Flugbetrieb des Flugzeugs verursachten Reibungswiderstand zu minimieren und eine gleichmäßige Überströmung der ersten Matrixkörperoberfläche zu ermöglichen, sind die Rippen vorzugsweise im Wesentlichen parallel zu Strömungslinien einer die erste Oberfläche des Matrixkörpers im Flugbetrieb des Flugzeugs überströmenden Luftströmung ausgerichtet. Ferner können die Rippen eine in Richtung der ersten Matrixkörperoberfläche gekrümmte Kontur aufweisen. Die sich von der ersten Matrixkörperoberfläche erstreckenden Rippen können aus dem gleichen Material wie der Matrixkörper, aber auch aus einem anderen Material bestehen. Beispielsweise können die Rippen aus einem Metall oder einem Kunststoffmaterial, vorzugsweise einem faserverstärkten Kunststoffmaterial gefertigt sein.

Das erfindungsgemäße Flugzeugkühlsystem umfasst mindestens einen oben beschriebenen Kühler. Grundsätzlich kann das erfindungsgemäße Kühlsystem mit lediglich einem Kühler ausgestattet sein, der an einer gewünschten Position des Flugzeugrumpfs angeordnet sein kann. Das erfindungsgemäße Flugzeugkühlsystem kann jedoch auch mit einer Mehrzahl von Kühlern versehen sein. Beispielsweise kann das Flugzeugkühlsystem mindestens einen im Bereich des Hecks des Flugzeugs angeordneten Kühler sowie mindestens einen im Bereich der Belly Fairing des Flugzeugs angeordneten Kühler umfassen. Das erfindungsgemäße Flugzeugkühlsystem kann dazu eingerichtet sein, eine bestimmte wärmeerzeugende Komponente oder ein bestimmtes wärmeerzeugendes System an Bord des Flugzeugs mit Kühlenergie zu versorgen. Falls gewünscht, kann das erfindungsgemäße Flugzeugkühlsystem jedoch auch so ausgelegt sein, dass es als zentrales Kühlsystem des Flugzeugs dienen kann.

Das erfindungsgemäße Kühlsystem ist mit einem Kühler ausgestattet, der leichtgewichtig gestaltbar ist und keinen oder nur wenig Einbauraum an Bord des Flugzeugs beansprucht. Ferner kann bei dem erfindungsgemäßen Flugzeugkühlsystem zumindest teilweise auf Leitungen sowie Montagekomponenten verzichtet werden. Das Flugzeugkühlsystem kann somit insgesamt leichtgewichtig und kompakt gestaltet werden. Darüber hinaus zeichnet sich das erfindungsgemäße Kühlsystem aufgrund der großen durchströmbaren Fläche des Kühlers durch eine hohe Kühlleistung aus. Ferner ermöglichen die geringen Druckverluste beim Durchströmen des Kühlers einen besonders energieeffizienten Betrieb des Systems. Die Kühler des erfindungsgemäßen Kühlsystems sind insbesondere bei einer geeigneten Anordnung beispielsweise im Bereich des Hecks oder der Belly Fairing des Flugzeugs nur wenig verschmutzungsanfällig, so dass das System insgesamt nur geringen Wartungsaufwand erfordert. Im Übrigen ist der Kühler des erfindungsgemäßen Kühlsystems bei der Montage sowie bei der Durchführung von Wartungsarbeiten einfach zugänglich.

Das erfindungsgemäße Flugzeugkühlsystem umfasst eine Steuereinheit, die dazu eingerichtet ist, die Kühlmittelströmung durch die in dem Matrixkörper des Kühlers ausgebildeten Kühlmittelkanäle zumindest in bestimmten Betriebsphasen des Kühlsystems derart zu steuern, dass das Kühlmittel im Bereich der ersten Oberfläche des Matrixkörpers, die dazu eingerichtet ist, im in einem Flugzeug montierten Zustand des Kühlers eine Außenfläche der Flugzeugaußenhaut zu bilden, in die in dem Matrixkörper ausgebildeten Kühlmittelkanäle eintritt, und im Bereich der zweiten Oberfläche des Matrixkörpers, die dazu eingerichtet ist, im in einem Flugzeug montierten Zustand des Kühlers eine Innenfläche der Flugzeugaußenhaut zu bilden, aus den in dem Matrixkörper ausgebildeten Kühlmittelkanälen austritt. Mit anderen Worten, die Steuereinheit steuert die Kühlmittelströmung durch die in dem Matrixkörper des Kühlers ausgebildeten Kühlmittelkanäle derart, dass das Kühlmittel, vorzugsweise Umgebungsluft, durch die in dem Matrixkörper des Kühlers ausgebildeten Kühlmittelkanäle aus der Flugzeugumgebung in einen Innenraum eines Flugzeugrumpfs gefördert wird, d.h. der Matrixkörper des Kühlers von außen nach innen von dem Kühlmittel durchströmt wird.

Das Kühlmittel kann seine Kühlenergie beim Durchströmen der in dem Matrixkörper ausgebildeten Kühlmittelkanäle an ein Wärmeträgermedium abgeben, das ebenfalls in dem Matrixkörper des Kühlers ausgebildete Wärmeträgermedienkanäle durchströmt. Alternativ oder zusätzlich dazu kann das die in dem Matrixkörper ausgebildeten Kühlmittelkanäle durchströmende Kühlmittel auch im Innenraum des Flugzeugrumpfs zur direkten Kühlung einer wärmeerzeugenden Komponente oder eines wärmeerzeugenden Systems genutzt werden. Zur Steuerung der Kühlmittelströmung durch die in dem Matrixkörper des Kühlers ausgebildeten Kühlmittelkanäle kann die Steuereinheit beispielsweise den Betrieb einer Fördereinrichtung, wie z.B. eines Gebläses entsprechend steuern.

Das erfindungsgemäße Flugzeugkühlsystem umfasst vorzugsweise ferner eine den Innenraum des Flugzeugrumpfs mit der Flugzeugumgebung verbindende Öffnung, die dazu eingerichtet ist, in den Betriebsphasen des Kühlsystems, in denen der Matrixkörper des Kühlers von der ersten Matrixkörperoberfläche in Richtung der zweiten Matrixkörperoberfläche von dem Kühlmittel durchströmt wird, als Kühlmittelauslass zu wirken, durch den das Kühlmittel nach dem Durchströmen des Matrixkörpers in die Flugzeugumgebung zurückführbar ist. Die beispielsweise in der Flugzeugaußenhaut vorgesehene Öffnung kann einen variablen Strömungsquerschnitt aufweisen und/oder, beispielsweise mittels einer Klappe, verschließbar sein. Die Steuereinheit, die dazu dient, die Kühlmittelströmung durch die in dem Matrixkörper des Kühlers ausgebildeten Kühlmittelkanäle, beispielsweise durch eine entsprechende Steuerung einer Fördereinrichtung, zu steuern, kann auch dazu herangezogen werden, den variablen Strömungsquerschnitt der Öffnung und/oder eine Position einer Klappe zum Verschließen der Öffnung zu steuern. Falls gewünscht oder erforderlich, kann jedoch auch eine separate Steuereinheit zur Steuerung des variablen Strömungsquerschnitts der Öffnung und/oder der Verschlussklappe eingesetzt werden. Falls gewünscht, kann die Öffnung in einem Bereich der Flugzeugaußenhaut angeordnet sein, der es ermöglicht, dass die Kühlmittelströmung nach dem Durchströmen des Matrixkörpers des Kühlers und vor der Rückführung in die Flugzeugumgebung noch zur direkten Kühlung einer wärmeerzeugenden Einrichtung an Bord des Flugzeugs genutzt werden kann.

Ein besonders energieeffizienter Betrieb des erfindungsgemäßen Flugzeugkühlsystems ist dann möglich, wenn die den Innenraum des Flugzeugrumpfs mit der Flugzeugumgebung verbindende und als Kühlmittelauslass wirkende Öffnung in einem Bereich der Flugzeugaußenhaut angeordnet ist, auf den im Flugbetrieb des Flugzeugs ein geringerer Druck wirkt als auf den durch den Matrixkörper des Kühlers gebildeten Flugzeugaußenhautabschnitt. Bei einer derartigen Ausgestaltung des erfindungsgemäßen Flugzeugkühlsystems können im Flugbetrieb des Flugzeugs ohnehin vorhandene Druckdifferenzen im Bereich der Flugzeugaußenhaut zur Förderung des Kühlmittels durch den Matrixkörper des Kühlers und schließlich durch die als Kühlmittelauslass wirkende Öffnung zurück in die Flugzeugumgebung genutzt werden. Eine beispielsweise in Form eines Gebläses oder dergleichen ausgebildete Fördereinrichtung des Flugzeugkühlsystems kann dann zumindest in einigen Betriebsphasen des Flugzeugkühlsystems mit weniger Leistung betrieben werden. Die Fördereinrichtung kann dann unter Umständen weniger leistungsstark und damit kompakter und leichtgewichtiger ausgelegt werden. Zumindest ist es jedoch nicht erforderlich, die Fördereinrichtung stets im Bereich ihres Leistungsmaximums zu betreiben, wodurch die Lebensdauer der Fördereinrichtung erhöht und ihre Wartungsanfälligkeit verringert werden kann.

Die den Innenraum des Flugzeugrumpfs mit der Flugzeugumgebung verbindende und als Kühlmittelauslass wirkende Öffnung kann im Bereich eines Heckspiegels des Flugzeugs, im Bereich einer von einem Heck des Flugzeugs abgewandten Kante eines Flugzeugseitenleitwerks und/oder im Bereich einer Belly Fairing des Flugzeugs angeordnet sein. Es versteht sich, dass die Anordnung der Öffnung vorzugsweise an die Anordnung des Kühlers im Rumpf des Flugzeugs angepasst ist. Beispielsweise bietet sich die Anordnung der Öffnung im Bereich des Heckspiegels oder der vom Heck des Flugzeugs abgewandten Kante des Flugzeugseitenwerks dann an, wenn der Matrixkörper des Kühlers dazu eingerichtet ist, einen im Bereich des Hecks angeordneten Flugzeugaußenhautabschnitt zu bilden. Eine im Bereich der Belly Fairing des Flugzeugs angeordneter Öffnung ist insbesondere im Zusammenwirken mit einem Kühler vorteilhaft, dessen Matrixkörper dazu eingerichtet ist, einen im Bereich der Belly Fairing liegenden Flugzeugaußenhautabschnitt zu bilden.

Das erfindungsgemäße Flugzeugkühlsystem umfasst ferner eine Steuereinheit, die dazu eingerichtet ist, die Kühlmittelströmung durch die in dem Matrixkörper des Kühlers ausgebildeten Kühlmittelkanäle zumindest in bestimmten Betriebsphasen des Kühlsystems derart zu steuern, dass das Kühlmittel im Bereich der zweiten Oberfläche des Matrixkörpers, die dazu eingerichtet ist, im in einem Flugzeug montierten Zustand des Kühlers eine Innenfläche der Flugzeugaußenhaut zu bilden, in die in dem Matrixkörper ausgebildeten Kühlmittelkanäle eintritt, und im Bereich der ersten Oberfläche des Matrixkörpers, die dazu eingerichtet ist im in einem Flugzeug montierten Zustand des Kühlers eine Außenfläche der Flugzeugaußenhaut zu bilden, aus den in dem Matrixkörper ausgebildeten Kühlmittelkanälen austritt. Mit anderen Worten, die Steuereinheit ist dazu eingerichtet, die Kühlmittelströmung derart zu steuern, dass das Kühlmittel den Matrixkörper von innen nach außen, d.h. vom Innenraum des Flugzeugrumpfs in Richtung der Flugzeugumgebung durchströmt. Zur Steuerung der Kühlmittelströmung durch die in dem Matrixkörper des Kühlers ausgebildeten Kühlmittelkanäle kann die Steuereinheit beispielsweise den Betrieb einer Fördereinrichtung des Flugzeugkühlsystems, wie z.B. eines Gebläses oder dergleichen entsprechend steuern.

Das erfindungsgemäße Flugzeugkühlsystem umfasst eine Steuereinheit die dazu in der Lage ist, die Kühlmittelströmung in verschiedenen Betriebsphasen des Flugzeugkühlsystems in verschiedenen Richtungen durch die in dem Matrixkörper des Kühlers ausgebildeten Kühlmittelkanäle zu steuern. Beispielsweise kann das Flugzeugkühlsystem dann im Bodenbetrieb und im Flugbetrieb des Flugzeugs in unterschiedlichen Betriebsarten betrieben werden. Zum Beispiel kann die Steuereinheit die Kühlmittelströmung im Bodenbetrieb des Flugzeugs derart steuern, dass das Kühlmittel den Matrixkörper des Kühlers von außen nach innen durchströmt. Im Flugbetrieb des Flugzeugs kann die Steuereinheit die Kühlmittelströmung dagegen derart steuern, dass das Kühlmittel den Matrixkörper des Kühlers von innen nach außen durchströmt. Alternativ dazu kann im Bodenbetrieb des Flugzeugs auch eine Durchströmung des Matrixkörpers von innen nach außen und im Flugbetrieb des Flugzeugs eine Durchströmung des Matrixkörpers von außen nach innen vorgesehen werden.

Das erfindungsgemäße Flugzeugkühlsystem kann ferner eine den Innenraum des Flugzeugrumpfs mit der Flugzeugumgebung verbindende Öffnung umfassen, die dazu eingerichtet ist, in den Betriebsphasen des Kühlsystems, in denen der Matrixkörper des Kühlers von der zweiten Matrixkörperoberfläche in Richtung der ersten Matrixkörperoberfläche von dem Kühlmittel durchströmt wird, als Kühlmitteleinlass zu wirken, durch den das Kühlmittel vor dem Durchströmen des Matrixkörpers aus der Flugzeugumgebung entnehmbar ist. Die beispielsweise in der Flugzeugaußenhaut vorgesehene Öffnung kann einen variablen Strömungsquerschnitt aufweisen und/oder, beispielsweise mittels einer Klappe, verschließbar sein. Die Steuereinheit, die dazu dient, die Kühlmittelströmung durch die in dem Matrixkörper des Kühlers ausgebildeten Kühlmittelkanäle, beispielsweise durch eine entsprechende Steuerung einer Fördereinrichtung, zu steuern, kann auch dazu herangezogen werden, den variablen Strömungsquerschnitt der Öffnung und/oder eine Position einer Klappe zum Verschließen der Öffnung zu steuern. Falls gewünscht oder erforderlich, kann jedoch auch eine separate Steuereinheit zur Steuerung des variablen Strömungsquerschnitts der Öffnung und/oder der Verschlussklappe eingesetzt werden. Falls gewünscht, kann die Öffnung in einem Bereich der Flugzeugaußenhaut angeordnet sein, der es ermöglicht, dass die Kühlmittelströmung vor dem Durchströmen des Matrixkörpers des Kühlers zur direkten Kühlung einer wärmeerzeugenden Einrichtung an Bord des Flugzeugs genutzt werden kann. Falls gewünscht, kann die den Innenraum des Flugzeugrumpfs mit der Flugzeugumgebung verbindende und als Kühlmitteleinlass wirkende Öffnung in Form eines oberflächenbündigen frontal angeordneten Scoop-Lufteinlasses ausgestaltet sein.

Ein besonders energieeffizienter Betrieb des erfindungsgemäßen Flugzeugkühlsystems ist dann möglich, wenn die den Innenraum des Flugzeugrumpfs mit der Flugzeugumgebung verbindende und als Kühlmitteleinlass wirkende Öffnung in einem Bereich der Flugzeugaußenhaut angeordnet ist, auf den im Flugbetrieb des Flugzeugs ein höherer Druck wirkt als auf den durch den Matrixkörper des Kühlers gebildeten Flugzeugaußenhautabschnitt. Bei einer derartigen Ausgestaltung des erfindungsgemäßen Flugzeugkühlsystems können im Flugbetrieb des Flugzeugs ohnehin vorhandene Druckdifferenzen im Bereich der Flugzeugaußenhaut zur Förderung des Kühlmittels durch die als Kühlmitteleinlass wirkende Öffnung in den Innenraum des Flugzeugrumpfs und anschließend durch den Matrixkörper des Kühlers zurück in die Flugzeugumgebung genutzt werden. Eine beispielsweise in Form eines Gebläses oder dergleichen ausgebildete Fördereinrichtung des Flugzeugkühlsystems kann dann zumindest in einigen Betriebsphasen des Flugzeugkühlsystems mit weniger Leistung betrieben werden. Die Fördereinrichtung kann dann unter Umständen weniger leistungsstark und damit kompakter und leichtgewichtiger ausgelegt werden. Zumindest ist es jedoch nicht erforderlich, die Fördereinrichtung stets im Bereich ihres Leistungsmaximums zu betreiben, wodurch die Lebensdauer der Fördereinrichtung erhöht und ihre Wartungsanfälligkeit verringert werden kann.

Die den Innenraum des Flugzeugrumpfs mit der Flugzeugumgebung verbindende und als Kühlmitteleinlass wirkende Öffnung kann im Bereich eines Heckspiegels des Flugzeugs, im Bereich einer von einem Heck des Flugzeugs abgewandten Kante eines Flugzeugseitenleitwerks und/oder im Bereich einer Belly Fairing des Flugzeugs angeordnet sein. Es versteht sich, dass die Anordnung der Öffnung vorzugsweise an die Anordnung des Kühlers im Rumpf des Flugzeugs angepasst ist. Beispielsweise bietet sich die Anordnung der Öffnung im Bereich des Heckspiegels oder der vom Heck des Flugzeugs abgewandten Kante des Flugzeugseitenwerks dann an, wenn der Matrixkörper des Kühlers dazu eingerichtet ist, einen im Bereich des Hecks angeordneten Flugzeugaußenhautabschnitt zu bilden. Eine im Bereich der Belly Fairing des Flugzeugs angeordneter Öffnung ist insbesondere im Zusammenwirken mit einem Kühler vorteilhaft, dessen Matrixkörper dazu eingerichtet ist, einen im Bereich der Belly Fairing liegenden Flugzeugaußenhautabschnitt zu bilden.

Grundsätzlich ist es möglich, das Flugzeugkühlsystem mit mehreren den Innenraum des Flugzeugrumpfs mit der Flugzeugumgebung verbindende Öffnungen zu versehen, die entweder als nur Kühlmittelauslass oder als nur Kühlmitteleinlass wirken können. Vorzugsweise weist das Flugzeugkühlsystem zur Minimierung des durch das Kühlsystem im Flugbetrieb des Flugzeugs verursachten Luftwiderstands jedoch nur eine den Innenraum des Flugzeugrumpfs mit der Flugzeugumgebung verbindende Öffnung auf, die je nach Betriebszustand des Flugzeugkühlsystems als Kühlmittelauslass oder als Kühlmitteleinlass wirkt.

Die Steuereinheit des erfindungsgemäßen Flugzeugkühlsystems kann ferner dazu eingerichtet sein, durch eine entsprechende Steuerung der Position eines beispielsweise in Form einer Klappe ausgebildeten Steuerelements, das einen Strömungsquerschnitt einer den Innenraum des Flugzeugrumpfs mit der Flugzeugumgebung verbindenden Öffnung festlegt, einen die Öffnung durchströmenden Kühlmittelvolumenstrom zu steuern. Durch die Steuerung des Kühlmittelvolumenstrom durch die Öffnung kann z.B. die von dem Flugzeugkühlsystem gelieferte Kühlleistung beeinflusst werden. Ferner kann die Steuereinheit dazu eingerichtet sein, durch eine entsprechende Steuerung der Position der den Strömungsquerschnitt der Öffnung steuernden Klappe den im Flugbetrieb des Flugzeugs durch die Klappe verursachten Luftwiderstand zu steuern. Beispielsweise kann die Steuereinheit die Klappe in eine entsprechende Öffnungsposition steuern, wenn es gewünscht ist, die Klappe als zusätzliche Airbrake zu nutzen.

Das erfindungsgemäße Flugzeugkühlsystem umfasst vorzugsweise ferner eine Steuereinheit, die dazu eingerichtet ist, die Kühlmittelströmung derart zu steuern, dass zumindest in bestimmten Betriebsphasen des Flugzeugkühlsystems die erste Oberfläche des Matrixkörpers, die dazu eingerichtet ist, im in einem Flugzeug montierten Zustand des Kühlers eine Außenfläche des Flugzeugaußenhaut zu bilden, von dem Kühlmittel überströmt wird. Mit anderen Worten, die Steuereinheit steuert die Kühlmittelströmung derart, dass im Wesentlichen keine Durchströmung der in dem Matrixkörper des Kühlers ausgebildeten Kühlmittelkanäle stattfindet, sondern stattdessen das Kühlmittel über die erste Oberfläche des Matrixkörpers geführt wird. Die Steuereinheit kann eine separate Steuereinheit sein. Vorzugsweise umfasst das erfindungsgemäße Flugzeugkühlsystem jedoch eine Steuereinheit, die dazu in der Lage ist, das Flugzeugkühlsystem sowohl in einem Durchströmungsbetrieb, d.h. einem Betriebszustand, bei dem der Matrixkörper des Kühlers von Kühlmittel durchströmt wird, als auch im Überströmbetrieb, d.h. einem Betriebszustand, bei dem die erste Oberfläche des Matrixkörper von dem Kühlmittel überströmt wird, zu steuern.

Um das erfindungsgemäße Flugzeugkühlsystem in den Überströmungsbetrieb zu steuern, ist die Steuereinheit vorzugsweise dazu eingerichtet, in den Betriebsphasen des Flugzeugkühlsystems, in denen die erste Matrixkörperoberfläche von dem Kühlmittel überströmt wird, eine den Innenraum des Flugzeugrumpfs mit der Flugzeugumgebung verbindende Öffnung zu verschließen, die in Betriebsphasen des Flugzeugkühlsystems, in denen der Matrixkörper des Kühlers von dem Kühlmittel durchströmt wird, dazu dient, als Kühlmittelauslass oder als Kühlmitteleinlass zu wirken. Mit anderen Worten, die Steuereinheit steuert beispielsweise eine die Öffnung verschließende Klappe in ihre geschlossene Position.

Ferner kann die Steuereinheit dazu eingerichtet sein, in den Betriebsphasen des Flugzeugkühlsystems, in denen die erste Matrixkörperoberfläche von dem Kühlmittel überströmt wird, eine Fördereinrichtung auszuschalten, die in Betriebsphasen des Flugzeugkühlsystems, in denen der Matrixkörper von dem Kühlmittel durchströmt wird, dazu dient, Kühlmittel durch die in dem Matrixkörper des Kühlers ausgebildeten Kühlmittelkanäle zu fördern. Mit anderen Worten, im Überströmbetrieb des erfindungsgemäßen Flugzeugkühlsystems schaltet die Steuereinheit die Fördereinrichtung zur Förderung von Kühlmittel durch die in dem Matrixköper des Kühlers ausgebildeten Kühlmittelkanäle aus.

Durch das Schließen der den Innenraum des Flugzeugrumpfs mit der Flugzeugumgebung verbindenden Öffnung und das Ausschalten der Fördereinrichtung wird bewirkt, dass zumindest eine überwiegende Menge des Kühlmittels lediglich die erste Matrixkörperoberfläche überströmt und nicht länger in die in dem Matrixkörper ausgebildeten Kühlmittelkanäle eintritt. Ein Betreiben des erfindungsgemäßen Flugzeugkühlsystems im Überströmbetrieb bietet sich insbesondere im Flugbetrieb des Flugzeugs an. Im Bodenbetrieb des Flugzeugs wird das Flugzeugkühlsystem dagegen vorzugsweise im Durchströmungsbetrieb betrieben. Im Überströmungsbetrieb des erfindungsgemäßen Flugzeugkühlsystems wird die Strömung des Kühlmittels über die erste Matrixkörperoberfläche vorzugsweise durch eine Mehrzahl von Rippen gesteuert, die sich von der ersten Matrixkörperoberfläche erstrecken und vorzugsweise im Wesentlichen parallel zu Strömungslinien der die erste Matrixkörperoberfläche im Flugbetrieb des Flugzeugs umströmenden Luftströmung ausgerichtet sind.

Bei einem erfindungsgemäßen Verfahren zum Betreiben eines Flugzeugkühlsystems wird ein Matrixkörpers eines Kühlers, in dem eine Mehrzahl von Kühlmittelkanälen ausgebildet ist, die sich von einer ersten Oberfläche des Matrixkörpers zu einer zweiten Oberfläche des Matrixkörpers erstrecken, und der dazu eingerichtet ist, einen Abschnitt einer Flugzeugaußenhaut zu bilden, zumindest in bestimmten Betriebsphasen des Flugzeugkühlsystems von einem Kühlmittel durchströmt.

Die Kühlmittelströmung durch die in dem Matrixkörper des Kühlers ausgebildeten Kühlmittelkanäle wird derart gesteuert, dass das Kühlmittel zumindest in bestimmten Betriebsphasen des Flugzeugkühlsystems im Bereich der ersten Oberfläche des Matrixkörpers, die dazu eingerichtet ist, im in einem Flugzeug montierten Zustand des Kühlers eine Außenfläche der Flugzeugaußenhaut zu bilden, in die in dem Matrixkörper ausgebildeten Kühlmittelkanäle eintritt, und im Bereich der zweiten Oberfläche des Matrixkörpers, die dazu eingerichtet ist, im in einem Flugzeug montierten Zustand des Kühlers eine Innenfläche der Flugzeugaußenhaut zu bilden, aus den in dem Matrixkörper ausgebildeten Kühlmittelkanälen austritt. Mit anderen Worten, die Kühlmittelströmung durch den Matrixkörper kann derart gesteuert werden, dass das Kühlmittel den Matrixkörper von außen nach innen durchströmt.

Die Kühlmittelströmung durch die in dem Matrixkörper des Kühlers ausgebildeten Kühlmittelkanäle wird derart gesteuert werden, dass das Kühlmittel zumindest in bestimmten Betriebsphasen des Flugzeugkühlsystems im Bereich der zweiten Oberfläche des Matrixkörpers, die dazu eingerichtet ist, im in einem Flugzeug montierten Zustand des Kühlers eine Innenfläche der Flugzeugaußenhaut zu bilden, in die in dem Matrixkörper ausgebildeten Kühlmittelkanäle eintritt, und im Bereich einer ersten Oberfläche des Matrixkörpers, die dazu eingerichtet ist, im in einem Flugzeug montierten Zustand des Kühlers eine Außenfläche der Flugzeugaußenhaut zu bilden, aus den in dem Matrixkörper ausgebildeten Kühlmittelkanälen austritt. Mit anderen Worten, die Kühlmittelströmung kann derart gesteuert werden, dass das Kühlmittel den Matrixkörper von innen nach außen durchströmt.

Vorzugsweise wird die Kühlmittelströmung nach dem Durchströmen des Matrixkörpers des Kühlers durch eine einen Innenraum des Flugzeugrumpfs mit der Flugzeugumgebung verbindende und als Kühlmittelauslass wirkende Öffnung in die Flugzeugumgebung zurückgeführt.

Auf die den Innenraum des Flugzeugrumpfs mit der Flugzeugumgebung verbindende und als Kühlmittelauslass wirkende Öffnung wirkt im Flugbetrieb des Flugzeugs vorzugsweise ein geringerer Druck als auf den durch den Matrixkörper des Kühlers gebildeten Flugzeugaußenhautabschnitt.

Vor dem Durchströmen des Matrixkörpers des Kühlers kann die Kühlmittelströmung durch eine einen Innenraum des Flugzeugrumpfs mit der Flugzeugumgebung verbindende und als Kühlmitteleinlass wirkende Öffnung aus der Flugzeugumgebung entnommen werden.

Durch eine entsprechende Steuerung der Position einer Klappe, die einen Strömungsquerschnitt der den Innenraum des Flugzeugrumpfs mit der Flugzeugumgebung verbindenden und als Kühlmitteleinlass wirkenden Öffnung festlegt, kann ein die Öffnung durchströmender Kühlmittelvolumenstrom und/oder ein im Flugbetrieb des Flugzeugs durch die Klappe verursachter Luftwiderstand wie gewünscht gesteuert werden.

Zumindest in bestimmten Betriebsphasen des Flugzeugkühlsystems kann die erste Oberfläche des Matrixköpers, die dazu eingerichtet ist, im in einem Flugzeug montierten Flugzeug des Kühlers eine Außenfläche der Flugzeugaußenhaut zu bilden, von dem Kühlmittel überströmt werden. Mit anderen Worten, in bestimmten Betriebsphasen des Flugzeugkühlsystems wird das Kühlmittel nicht durch die in dem Matrixkörper ausgebildeten Kühlmittelkanäle geleitet, sondern über die erste Matrixkörperoberfläche geführt. Eine derartige Steuerung der Kühlmittelströmung bietet sich insbesondere im Flugbetrieb des Flugzeugs an.

In den Betriebsphasen des Flugzeugkühlsystems, in denen die erste Matrixkörperoberfläche von dem Kühlmittel überströmt wird, wird vorzugsweise eine den Innenraum des Flugzeugrumpfs mit der Flugzeugumgebung verbindende Öffnung verschlossen, die in Betriebsphasen des Flugzeugkühlsystems, in denen der Matrixkörper des Kühlers von dem Kühlmittel durchströmt wird als Kühlmittelauslass oder als Kühlmitteleinlass wirkt.

Ferner ist in Betriebsphasen des Flugzeugkühlsystems, in denen die erste Matrixkörperoberfläche von dem Kühlmittel überströmt wird, vorzugsweise eine Fördereinrichtung ausgeschaltet, die in Betriebsphasen des Flugzeugkühlsystems, in denen der Matrixkörper des Kühlers von dem Kühlmittel durchströmt wird, dazu dient, Kühlmittel durch die in dem Matrixkörper des Kühlers ausgebildeten Kühlmittelkanäle zu fördern.

In den Betriebsphasen des Kühlsystems, in denen die erste Matrixkörperoberfläche von dem Kühlmittel überströmt wird, wird die Kühlmittelströmung über die erste Matrixkörperoberfläche vorzugsweise durch eine Mehrzahl von Rippen gesteuert, die sich von der ersten Matrixkörperoberfläche vorzugsweise parallel zu Strömungslinien einer die erste Matrixkörperoberfläche im Flugbetrieb des Flugzeugs umströmenden Luftströmung erstrecken.

Bevorzugte Ausführungsbeispiele der Erfindung werden nun anhand der beigefügten schematischen Zeichnungen näher erläutert, von denen
- Figur 1: eine Darstellung eines ersten Ausführungsbeispiels eines zur Verwendung in einem Flugzeugkühlsystem geeigneten Kühlers zeigt,
- Figur 2: eine Querschnittsansicht des Kühlers gemäß Figur 1 zeigt,
- Figur 3: den Kühler gemäß Figur 1 im in einem Flugzeug montierten Zustand zeigt,
- Figur 4: eine Darstellung eines zweiten Ausführungsbeispiels eines zum Einsatz in einem Flugzeugkühlsystem geeigneten Kühlers zeigt,
- Figur 5: eine Querschnittsansicht des Kühlers gemäß Figur 4 zeigt,
- Figur 6: eine Querschnittsansicht eines dritten Ausführungsbeispiels eines zum Einsatz in einem Flugzeugkühlsystem geeigneten Kühlers zeigt,
- Figur 7: eine Seitenansicht eines Flugzeugs zeigt, das mit einem Flugzeugkühlsystem mit einer Mehrzahl von Kühlern ausgestattet ist,
- Figur 8: eine Ansicht der Rumpfunterseite des Flugzeugs gemäß Figur 7 zeigt,
- Figur 9: ein erstes Ausführungsbeispiel eines Flugzeugkühlsystems zeigt, das in einem ersten Betriebszustand betrieben wird,
- Figur 10: das Flugzeugkühlsystem gemäß Figur 9 zeigt, das in einem zweiten Betriebszustand betrieben wird,
- Figur 11: ein zweites Ausführungsbeispiel eines Flugzeugkühlsystems zeigt, das in einem ersten Betriebszustand betrieben wird,
- Figur 12: das Flugzeugkühlsystem gemäß Figur 11 zeigt, das in einem zweiten Betriebszustand betrieben wird,
- Figur 13: ein drittes Ausführungsbeispiel eines Flugzeugkühlsystems zeigt, das in einem ersten Betriebszustand betrieben wird,
- Figur 14: eine Detailansicht des Flugzeugkühlsystems gemäß Figur 13 zeigt,
- Figur 15: das Flugzeugkühlsystem gemäß Figur 13 zeigt, das in einem zweiten Betriebszustand betrieben wird, und
- Figur 16: eine Detailansicht des Flugzeugkühlsystems gemäß Figur 15 zeigt.

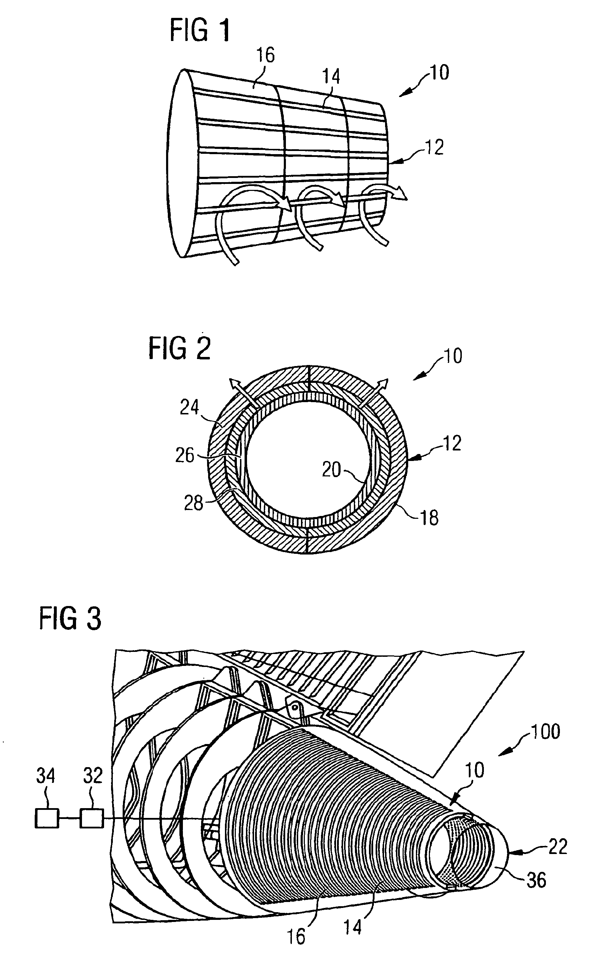

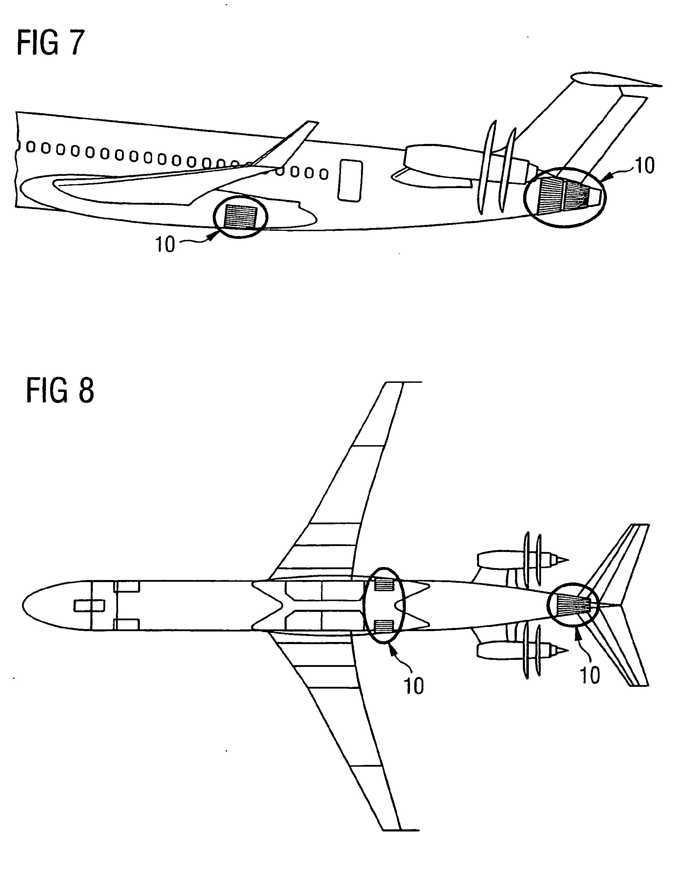

In den Figuren 1 bis 3 ist ein erstes Ausführungsbeispiel für einen Kühler 10 veranschaulicht, der zum Einsatz in einem Flugzeugkühlsystem 100 (siehe Figuren 7 bis 13 und 15) geeignet ist. Der in den Figuren 1 bis 3 gezeigte Kühler 10 umfasst einen Matrixkörper 12, der eine Mehrzahl von in den Figuren 1 und 3 schematisch dargestellten Lamellen 14 umfasst. Die Lamellen 14 begrenzen eine Mehrzahl von Kühlmittelkanälen 16, die sich von einer ersten Oberfläche 18 des Matrixkörpers 12 zu einer zweiten Oberfläche 20 des Matrixkörpers 12 (siehe Figur 2) erstrecken.

Der Matrixkörper 12 des Kühlers 10 ist hohlkegelstumpfförmig ausgebildet und, wie insbesondere in Figur 3 zu erkennen ist, dazu eingerichtet, einen zu einem Heckspiegel 22 eines Flugzeugs benachbarten Bereich einer Flugzeugaußenhaut zu bilden. Mit anderen Worten, der Matrixkörper 12 des Kühlers 10 ersetzt in dem zu dem Heckspiegel 22 benachbarten Bereich des Flugzeugs die in den übrigen Bereichen des Flugzeugs vorhandene Flugzeugaußenhaut. Die erste Matrixkörperoberfläche 18 bildet somit im in einem Flugzeug montierten Zustand des Kühlers 10 eine Außenfläche der Flugzeugaußenhaut, wohingegen die zweite Matrixkörperoberfläche 20 im in einem Flugzeug montierten Zustand des Kühlers 10 eine Innenfläche der Flugzeugaußenhaut bildet. Der Matrixkörper 12 des Kühlers 10 besteht aus einem Material, wie z.B. einem Metal oder einem Kunststoffmaterial, insbesondere einem faserverstärkten Kunststoffmaterial, dessen mechanische Eigenschaften an die Anforderungen angepasst sind, die an einen Flugzeugaußenhautabschnitt gestellt werden. Dadurch wird sichergestellt, dass der Kühler 10 den aus seiner Positionierung im Bereich der Flugzeugaußenhaut resultierenden strukturellen Anforderungen gewachsen ist.

Durch die in dem Matrixkörper 12 ausgebildeten Kühlmittelkanäle 16 ist der Matrixkörper 12 von Luft durchströmbar. Die die in dem Matrixkörper 12 des Kühlers 10 ausgebildeten Kühlmittelkanäle 16 durchströmende Luft kann in dem Flugzeugkühlsystem 100 dazu verwendet werden, eine wärmeerzeugende Einrichtung an Bord des Flugzeugs mit Kühlenergie zu versorgen. Die durch die Kühlmittelkanäle 16 geförderte Luft kann direkt oder indirekt zur Kühlung einer wärmeerzeugenden Komponente oder eines wärmeerzeugenden Systems an Bord des Flugzeugs genutzt werden. Beispielsweise kann aus der Flugzeugumgebung durch die in dem Matrixkörper 12 des Kühlers 10 ausgebildeten Kühlmittelkanäle 16 in einen Innenraum des Flugzeugrumpfs zugeführte Luft unmittelbar dazu genutzt werden, eine in dem Innenraum des Flugzeugrumpfs angeordnete wärmeerzeugende Komponente zu umströmen und dabei Kühlenergie an die wärmeerzeugende Komponente abzugeben. Eine optimale Nutzung der in der Umgebungsluft enthaltenen Kühlenergie ist jedoch dann möglich, wenn der Matrixkörper 12, wie insbesondere in Figur 2 veranschaulicht ist, in Form eines mehrschichtig aufgebauten Wärmeübertragers ausgebildet ist.

In Figur 2 ist zu erkennen, dass der Matrixkörper 12 des Kühlers 10 eine zu der ersten Matrixkörperoberfläche 18 benachbarte erste Wärmeübertragerschicht 24, eine zu der zweiten Matrixkörperoberfläche 20 benachbarte zweite Wärmeübertragerschicht 26 sowie eine zwischen der ersten Wärmeübertragerschicht 24 und der zweiten Wärmeübertragerschicht 26 angeordnete dritte Wärmeübertragerschicht 28 umfasst. Die drei Wärmeübertragerschichten 24, 26, 28 sind jeweils mit Wärmeträgermedienkanälen ausgebildet, die von einem zu kühlenden Wärmeträgermedium durchströmt werden. Die Wärmeübertragerschichten 24, 26, 28 sind verschiedenen wärmeerzeugenden Systemen an Bord des Flugzeugs zugeordnet, d.h. sie dienen dazu, diesen wärmeerzeugenden Systemen Kühlenergie zuzuführen.

Wenn der Matrixkörper 12 des Kühlers 10, wie in Figur 1 angedeutet, von außen nach innen, d.h. von der ersten Matrixkörperoberfläche 18 in Richtung der zweiten Matrixkörperoberfläche 20 von Kühlluft durchströmt wird, nimmt der Kühlenergieinhalt der Kühlluft beim Durchströmen des Matrixkörpers 12 durch Kühlenergietransfer auf die erste Wärmeübertragerschicht 24, die dritte Wärmeübertragerschicht 28 und schließlich die zweite Wärmeübertragerschicht 26 stetig ab. Eine optimale Ausnutzung der in der Kühlluft enthaltenen Kühlenergie ist daher dann gewährleistet, wenn die erste Wärmeübertragerschicht 24 dazu genutzt wird, ein wärmeerzeugendes System mit einem hohen Kühlleistungsbedarf zu kühlen. Die dritte Wärmeübertragerschicht 28 und schließlich die zweite Wärmeübertragerschicht 26 werden dagegen sinnvollerweise dazu verwendet, wärmeerzeugende Systeme mit einem geringeren Kühlleistungsbedarf mit der in der Kühlluft nach dem Durchströmen der ersten Wärmeübertragerschicht 24 verbliebenen Kühlenergie zu versorgen.

Wie später noch näher erläutert werden wird, ist es jedoch auch denkbar, die Kühlluft von innen nach außen, d.h. von der zweiten Matrixkörperoberfläche 20 in Richtung der ersten Matrixkörperoberfläche 18 durch den Matrixkörper 12 des Kühlers zu leiten. In einem derartigen Fall wird sinnvollerweise die zweite Wärmeübertragerschicht 26 zur Kühlung eines wärmeerzeugenden Systems mit hohem Kühlleistungsbedarf genutzt. Die dritte Wärmeübertragerschicht 28 und die erste Wärmeübertragerschicht 24 werden dagegen dann sinnvollerweise dazu eingesetzt, wärmeerzeugende Systeme mit einem geringeren Kühlleistungsbedarf mit der in der Kühlluft nach dem Durchströmen der zweiten Wärmeübertragerschicht 26 verbliebenen Kühlenergie zu versorgen.

Ferner kann die Zufuhr von Kühlluft in die verschiedenen Wärmeübertragerschichten 24, 26, 28 durch sogenannte Shutter gesteuert werden. Wenn ein einer Wärmeübertragerschicht 24, 26, 28 zugeordnetes wärmeerzeugendes System einen hohen Kühlleistungsbedarf hat, kann durch eine entsprechende Steuerung der Shutterpositionen eine ausreichende Kühlluftzufuhr in diese Wärmeübertragerschicht 24, 26, 28 gewährleistet werden. Ebenso kann durch eine entsprechende Steuerung der Shutterpositionen die Zufuhr von Kühlluft in eine Wärmeübertragerschicht 24, 26, 28 verringert oder sogar unterbunden werden, wenn ein der Wärmeübertragerschicht 24, 26, 28 zugeordnetes wärmeerzeugendes System einen lediglich geringen oder keinen Kühlleistungsbedarf hat. Dies ermöglicht eine besonders effektive und effiziente Nutzung der zur Verfügung stehenden Kühlluft.

Es versteht sich, dass die den Matrixkörper 12 durchströmende Kühlluft auch dann, wenn der Matrixkörper 12 in Form eines Wärmeübertragers ausgebildet ist, zusätzlich zur direkten Kühlung einer im Innenraum des Flugzeugrumpfs angeordneten wärmeerzeugenden Komponente genutzt werden kann. Beispielsweise kann die Kühlluft die wärmeerzeugende Komponente nach dem Durchströmen des Matrixkörpers 12 oder vor dem Durchströmen des Matrixkörpers 12 umströmen.

Die erste Matrixkörperoberfläche 18, die im in einem Flugzeug montierten Zustand des Kühlers 10 eine Außenfläche der Flugzeugaußenhaut bildet, weist eine Struktur auf, die geeignet ist, im Flugbetrieb des Flugzeugs, wenn die erste Matrixkörperoberfläche 18 von Luft überströmt wird, den Reibungswiderstand der ersten Matrixkörperoberfläche 18 zu verringern. Beispielsweise können die in den Matrixkörper 12 ausgebildeten Lamellen 14 im Bereich der ersten Matrixkörperoberfläche 18 scharfkantige feine Rippen bilden, die im Wesentlichen parallel zu der die erste Matrixkörperoberfläche 18 im Flugbetrieb des Flugzeugs überströmenden Luftströmung ausgerichtet sind. Durch eine derartige Ausgestaltung der ersten Matrixkörperoberfläche 18 wird gewährleistet, dass der Reibungswiderstand des Flugzeugs durch die Integration des Kühlers 10 in die Flugzeugaußenhaut nicht erhöht wird, sondern sogar gesenkt werden kann. Dies ermöglicht die Realisierung von Treibstoffersparnissen.

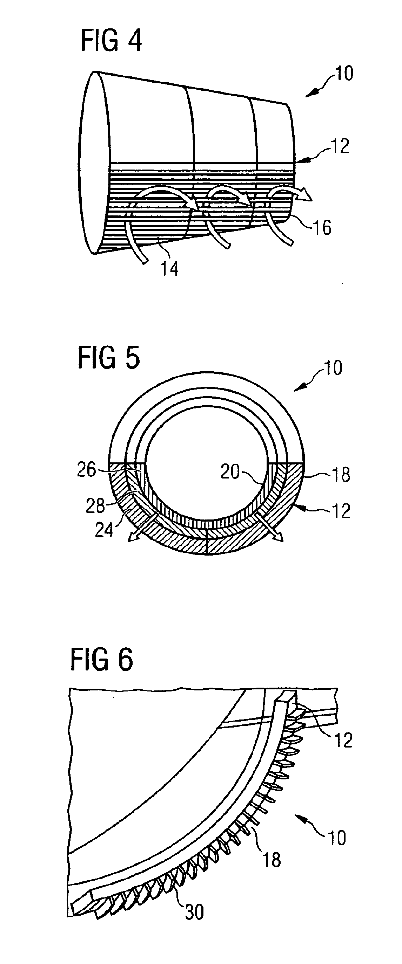

In den Figuren 4 und 5 ist ein zweites Ausführungsbeispiel eines Kühlers 10 gezeigt, der sich von dem in den Figuren 1 bis 3 veranschaulichten Kühler 10 dadurch unterscheidet, dass er lediglich die Form eines halben Hohlkegelstumpfs einnimmt. Der Matrixkörper 12 des in den Figuren 4 und 5 gezeigten Kühlers 10 ist insbesondere dazu eingerichtet, einen unteren Bereich eines zu einem Heckspiegel 22 eines Flugzeugs benachbarten Flugzeugaußenhautabschnitt zu bilden. Im Übrigen entspricht der Aufbau und die Funktionsweise des in den Figuren 4 und 5 veranschaulichten Kühlers 10 dem Aufbau und der Funktionsweise des in den Figuren 1 bis 3 gezeigten Kühlers 10.

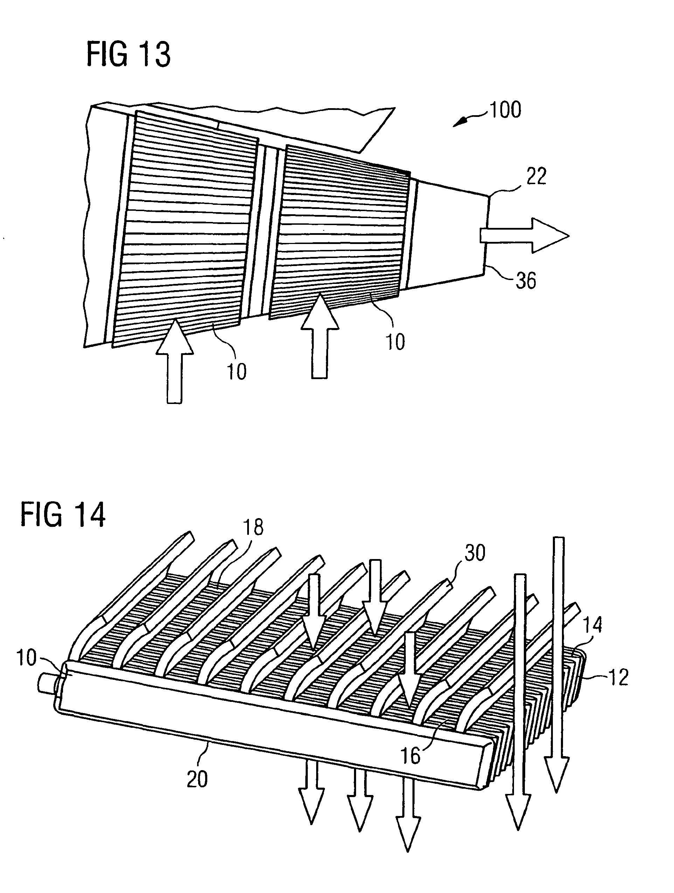

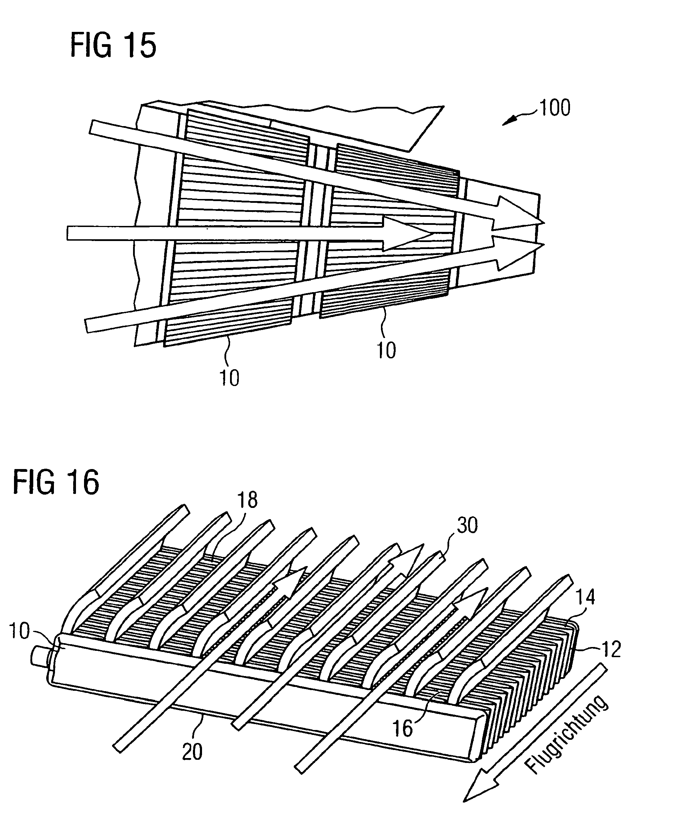

In Figur 6 ist ein drittes Ausführungsbeispiel eines zur Verwendung in einem Flugzeugkühlsystem 100 geeigneten Kühlers 10 veranschaulicht. Der Kühler 10 gemäß Figur 6 zeichnet sich dadurch aus, dass sich eine Mehrzahl von Rippen 30 von der ersten Oberfläche 18 des Matrixkörpers 12 erstreckt. Wie später noch näher erläutert werden wird, fungieren die Rippen 30 als Strömungsleitbleche und sind im Wesentlichen parallel zu Strömungslinien einer die erste Matrixkörperoberfläche 18 im Flugbetrieb des Flugzeugs umströmenden Luftströmung ausgerichtet. Darüber hinaus weisen die Rippen 30 eine in Richtung der ersten Matrixkörperoberfläche 18 gekrümmte Kontur auf (siehe hierzu auch Figuren 14 und 16). Durch die Rippen 30 kann eine Luftströmung, die die erste Matrixkörperoberfläche 18 im Flugbetrieb des Flugzeugs überströmt, wie gewünscht gesteuert werden. Ferner schützen die Rippen 30 den Matrixkörper 12 und insbesondere die erste Matrixkörperoberfläche 18 vor äußeren Einflüssen, wie z.B. Vogelschlag, Eisschlag, etc..

Alle in den Figuren 1 bis 6 gezeigten Kühler 10 können, bei Bedarf Abschnitte aufweisen, die nicht von Luft durchströmbar sind, d.h. z.B. keine Lamellenstruktur aufweisen oder mit einer Abdeckung versehen sein. Diese Abschnitte können beispielsweise in Bereichen der Kühler 10 vorgesehen sein, die insbesondere im Flugbetrieb des Flugzeugs starken mechanischen Belastungen ausgesetzt sind oder aufgrund ihrer Position besonders gefährdet für äußere Einflüsse sind.

In den Figuren 7 und 8 sind bevorzugte Positionen veranschaulicht, in denen Kühler 10 eines Flugzeugkühlsystems 100 im Bereich einer Flugzeugaußenhaut angeordnet sein können. Beispielsweise kann/können ein oder mehrere Kühler 10 im Bereich eines Hecks des Flugzeugs, beispielsweise benachbart zu dem Heckspiegel 22 des Flugzeugs positioniert sein. Ferner ist es denkbar, einen oder mehrere Kühler 10 im Bereich der Belly Fairing des Flugzeugs anzuordnen. Schließlich kann/können ein oder mehrere Kühler 10 auch im Bereich der Flügel des Flugzeugs positioniert werden. Eine derartige Kühleranordnung ermöglicht eine tangentiale Luftausblasung. Je nach Bedarf kann das Flugzeugkühlsystem 100 lediglich einen Kühler 10, aber auch mehrere Kühler 10 umfassen. Grundsätzlich können die Kühler 10 in beliebigen Bereichen des Flugzeugs angeordnet sein. Vorzugsweise ersetzen die Kühler 10 jedoch Abschnitte der Flugzeugaußenhaut, die verhältnismäßig gut vor äußeren Einflüssen, wie z.B. Vogelschlag, Eisschlag oder, im Fall von Triebwerksdefekten, aus dem Triebwerk gelösten Triebwerkskomponenten geschützt sind. Vor diesem Hintergrund ist die Anordnung der Kühler 10 im Bereich des Flugzeughecks oder im Bereich der Belly Fairing des Flugzeugs vorteilhaft.

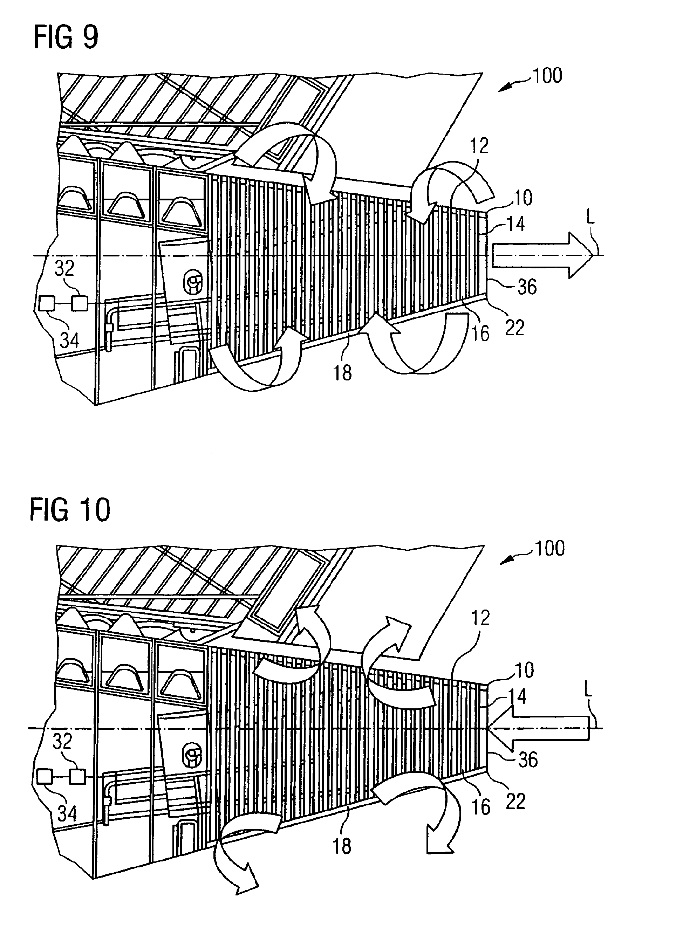

In den Figuren 9 und 10 ist ein Flugzeugkühlsystem 100 in verschiedenen Betriebsphasen veranschaulicht, das mit einem benachbart zu einem Heckspiegel 22 des Flugzeugs angeordneten, hohlkegelstumpfförmigen Kühler 10, wie er in den Figuren 1 bis 3 veranschaulicht ist, ausgestattet ist. Es versteht sich, dass das Flugzeugkühlsystem 100 statt mit einem in den Figuren 1 bis 3 veranschaulichten Kühler 10 auch mit einem in Form eines halben Hohlkegelstumpfs ausgebildeten Kühler 10 ausgestattet werden könnte, wie er in den Figuren 4 und 5 gezeigt ist. Das Kühlsystem 100 umfasst neben dem Kühler 10 eine in Form eines Gebläses ausgebildete Fördereinrichtung 32. Die Fördereinrichtung 32 kann beispielsweise in einem zu dem Heckspiegel 22 benachbarten Bereich des Flugzeugrumpfs angeordnet sein. Der Betrieb der Fördereinrichtung 32 wird von einer elektronischen Steuereinheit 34 gesteuert.

In dem in Figur 9 veranschaulichten Betriebszustand des Flugzeugkühlsystems 100 steuert die elektronische Steuereinheit 34 die Fördereinrichtung 32 derart, dass Luft aus der Flugzeugumgebung durch die in dem Matrixkörper 12 des Kühlers 10 ausgebildeten Kühlmittelkanäle 16 von der ersten Matrixkörperoberfläche 18 in Richtung der zweiten Matrixkörperoberfläche 20, d.h. von außen nach innen durch die in dem Matrixkörper 12 ausgebildeten Kühlmittelkanäle 16 gefördert wird. Beim Durchströmen der Kühlmittelkanäle 16 gibt die Umgebungsluft Kühlenergie ab. Nach dem Durchströmen des Matrixkörpers 12 des Kühlers 10 kann die durch den Matrixkörper 12 des Kühlers 10 in einen Innenraum des Flugzeugrumpf geleitete Kühlluft noch zur direkten Kühlung einer im Innenraum des Flugzeugrumpfs angeordneten wärmeerzeugenden Komponente genutzt werden. Schließlich wird die Luft durch eine im Bereich des Heckspiegels 22 vorgesehenen Öffnung 36 in die Flugzeugumgebung zurückgeführt. Die Öffnung 36 wirkt somit als Kühlmittelauslass. Die Öffnung 36 weist einen mittels einer nicht veranschaulichten Klappe variierbaren Strömungsquerschnitt auf. Die Position der den Strömungsquerschnitt der Öffnung 36 festlegenden Klappe wird, ebenso wie die Fördereinrichtung 32 von der elektronischen Steuereinheit 34 gesteuert.

Eine Luftabfuhr durch eine im Bereich des Flugzeugheckspiegels 22 angeordnete Öffnung 36 verursacht im Flugbetrieb des Flugzeugs lediglich einen verhältnismäßig geringen zusätzlichen Luftwiderstand. Falls gewünscht oder erforderlich kann der Heckspiegelbereich des Flugzeugsrumpfs auch nicht, wie in den Figuren 9 und 10 gezeigt, im Wesentlichen senkrecht zu einer Längsachse L des Flugzeugs, sondern in einem Winkel relativ zur Längsachse L des Flugzeugs ausgerichtet sein. Dadurch kann auf einfache Art und Weise der maximale Strömungsquerschnitt einer im Bereich des Heckspiegels 22 angeordneten Öffnung 36 vergrößert werden.

Ferner kann im Flugbetrieb des Flugzeugs durch die Luftzufuhr in den Innenraum des Flugzeugrumpfs durch die in dem Matrixkörper 12 des Kühlers 10 ausgebildeten Kühlmittelkanäle 16 eine sich im Flugbetrieb des Flugzeugs über der ersten Matrixkörperoberfläche 18 ausbildende Grenzschicht "abgesaugt" werden. Dadurch kann die Bildung zusätzlicher Luftwirbel im Bereich der ersten Matrixkörperoberfläche 18 vermieden und folglich die aerodynamischen Eigenschaften des Flugzeugs verbessert werden. Darüber hinaus kann durch die Luftabfuhr durch die im Bereich des Heckspiegels 22 angeordnete Öffnung 36 zusätzlicher Schub erzeugt werden, der im Flugbetrieb des Flugzeugs in vorteilhafter Weise genutzt werden kann.

In dem in Figur 10 gezeigten Betriebszustand des Flugzeugkühlsystems 100 wird die Fördereinrichtung 32 von der elektronischen Steuereinheit 34 derart gesteuert, dass Luft aus der Flugzeugumgebung durch die im Bereich des Flugzeugheckspiegels 22 angeordnete Öffnung 36 in den Innenraum des Flugzeugrumpfs gesaugt wird. Mit anderen Worten, die im Bereich des Flugzeugheckspiegels 22 vorgesehene, in den Innenraum des Flugzeugrumpfs mündende Öffnung 36 wird in dem in Figur 9 veranschaulichten Betriebszustand des Flugzeugkühlsystems 100 als Kühlmittelauslass genutzt, während sie in dem in Figur 10 gezeigten Betriebszustand des Flugzeugkühlsystems 100 als Kühlmitteleinlass dient. Die in den Innenraum des Flugzeugrumpfs geleitete Kühlluftströmung wird im Innenraum des Flugzeugrumpfs zunächst zur direkten Kühlung einer wärmeerzeugenden Komponente genutzt. Anschließend wird die Kühlluft durch die in dem Matrixkörper 12 des Kühlers 10 ausgebildeten Kühlmittelkanäle 16 geleitet, wobei die Kühlluft den Matrixkörper 12 von der zweiten Matrixkörperoberfläche 20 in Richtung der ersten Matrixkörperoberfläche 18, d.h. von innen nach außen durchströmt. Beim Durchströmen der in dem Matrixkörper 12 ausgebildeten Kühlmittelkanäle 16 gibt die Kühlluft Kühlenergie ab.

Auf die im Bereich des Flugzeugheckspiegels 22 angeordneten Öffnung 36 wirkt im Flugbetrieb des Flugzeugs ein höherer Druck als auf den Matrixkörper 12 des Kühlers 10. Die sich im Flugbetrieb aufbauende Druckdifferenz zwischen der als Lufteinlass wirkenden Öffnung und der ersten Matrixkörperoberfläche 18 kann somit in vorteilhafterweise dazu genutzt werden, die Kühlluftförderung durch die Öffnung und den Matrixkörper 12 zu unterstützen.

Wie bereits im Zusammenhang mit Figur 9 erläutert, kann der Strömungsquerschnitt der Öffnung 36, die in dem in Figur 9 gezeigten Betriebszustand des Flugzeugkühlsystems 100 als Luftauslass und in dem in Figur 10 gezeigten Betriebszustand des Flugzeugkühlsystems 100 als Lufteinlass genutzt wird, mittels einer Klappe gesteuert werden. In dem in Figur 10 gezeigten Betriebszustand des Flugzeugkühlsystems 100 kann durch eine entsprechende Steuerung der Klappenposition durch die elektronische Steuereinheit 34 ebenso wie durch eine entsprechende Steuerung der Fördereinrichtung 32 der in den Innenraum des Flugzeugrumpfs und schließlich durch den Matrixkörper 12 des Kühlers geförderte Kühlluftmassenstrom wie gewünscht gesteuert werden.

Falls gewünscht kann das Flugzeugkühlsystem 100 sowohl im Bodenbetrieb als auch im Flugbetrieb des Flugzeugs in dem in Figur 9 veranschaulichten Betriebszustand betrieben werden. In ähnlicher Weise kann das Flugzeugkühlsystem 100, falls gewünscht, sowohl im Flugbetrieb als auch im Bodenbetrieb des Flugzeugs in dem in Figur 10 gezeigten Betriebszustand betrieben werden. Die elektronische Steuereinheit 34 kann das Flugzeugkühlsystem jedoch auch so steuern, dass es im Bodenbetrieb, wie in Figur 9 gezeigt, im Flugbetrieb jedoch wie in Figur 10 veranschaulicht, betrieben wird. Schließlich ist es denkbar, das Flugzeugkühlsystem 100 mittels der elektronischen Steuereinheit 34 so zu steuern, dass es im Flugbetrieb wie in Figur 9 gezeigt, betrieben wird, während es im Bodenbetrieb des Flugzeugs wie in Figur 10 veranschaulicht betrieben wird.

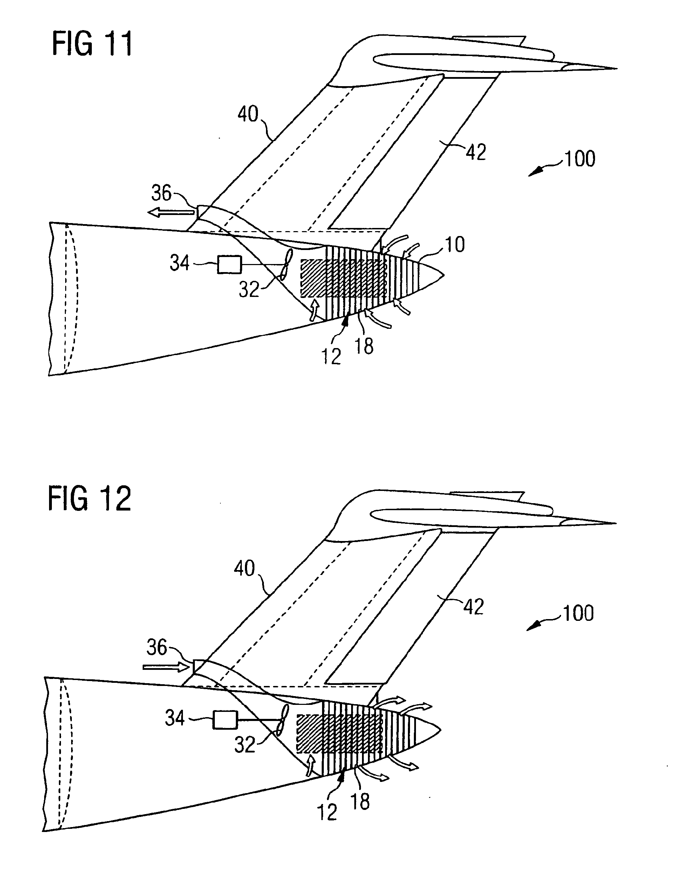

Das in den Figuren 11 und 12 veranschaulichte Flugzeugkühlsystem 100 unterscheidet sich von der Anordnung gemäß den Figuren 9 und 10 dadurch, dass eine in den Innenraum des Flugzeugrumpfs führende Öffnung 36 nicht im Bereich des Flugzeugheckspiegels 22, sondern im Bereich einer von dem Heck des Flugzeugs abgewandten Vorderkante 40 eines Flugzeugseitenleitwerks 42 angeordnet ist. In dem in Figur 11 veranschaulichten Betriebszustand des Flugzeugkühlsystems 100 wird die Fördereinrichtung 32 von der elektronischen Steuereinheit 34 derart gesteuert, dass Luft aus der Flugzeugumgebung den Matrixkörper 12 des Kühlers 10 von der ersten Matrixkörperoberfläche 18 in Richtung der zweiten Matrixkörperoberfläche 20, d.h. von außen nach innen durchströmt. Die Luftabfuhr aus dem Innenraum des Flugzeugrumpfs erfolgt in diesem Betriebszustand des Flugzeugkühlsystems 100 durch die dann als Luftauslass fungierende Öffnung 36 im Bereich der Vorderkante 40 des Flugzeugseitenleitwerks 42.

Im Gegensatz dazu dient die im Bereich der Vorderkante 40 des Flugzeugseitenleitwerks 42 vorgesehene Öffnung 36 in dem in Figur 12 gezeigten Betriebszustand des Kühlsystems 100 als Lufteinlass. Die Luftabfuhr aus dem Innenraum des Flugzeugrumpfs erfolgt durch die in dem Matrixkörper 12 des Kühlers 10 ausgebildeten Kühlmittelkanäle 16. Mit anderen Worten, der Matrixkörper 12 des Kühlers 10 wird von der zweiten Matrixkörperoberfläche 20 in Richtung der ersten Matrixkörperoberfläche 18, d.h. von innen nach außen durchströmt.

Die im Bereich der Vorderkante 40 des Flugzeugseitenleitwerks 42 vorgesehene Öffnung 36, die je nach Betriebszustand des Flugzeugkühlsystems 100 als Luftauslass oder als Lufteinlass fungiert, ist in Form eines Scoop-Einlasses ausgebildet und weist einen mittels einer nicht veranschaulichten Klappe variierbaren Strömungsquerschnitt auf. Der Kühlluftmassenstrom durch die Öffnung 36 kann somit von der elektronischen Steuereinheit 34 durch eine entsprechende Steuerung der Klappenposition wie gewünscht eingestellt werden. Ferner kann die Position der den Strömungsquerschnitt der im Bereich der Vorderkante 40 des Flugzeugseitenleitwerks 42 vorgesehenen Öffnung 36 einstellenden Klappe von der elektronischen Steuereinheit 34 im Flugbetrieb des Flugzeugs so gesteuert werden, dass die Klappe einen gewünschten Luftwiderstand verursacht. Die Klappe kann somit, falls gewünscht, als zusätzliche Airbrake eingesetzt werden.

Grundsätzlich kann das Flugzeugkühlsystem 100 sowohl im Flugbetrieb als auch im Bodenbetrieb des Flugzeugs wie in Figur 11 veranschaulicht oder wie in Figur 12 gezeigt betrieben werden. Es ist jedoch auch denkbar, das Flugzeugkühlsystem 100 im Bodenbetrieb des Flugzeugs in dem in Figur 11 veranschaulichten Betriebszustand und dem Flugbetrieb des Flugzeugs in dem in Figur 12 gezeigten Betriebszustand zu betrieben. Schließlich ist es möglich, das Flugzeugkühlsystem 100 im Flugbetrieb des Flugzeugs, wie in Figur 11 gezeigt, und im Bodenbetrieb des Flugzeugs wie in Figur 12 gezeigt zu betreiben.

In den Figuren 13 bis 16 ist schließlich ein drittes Ausführungsbeispiel eines Flugzeugkühlsystems 100 veranschaulicht. Das Flugzeugkühlsystem 100 umfasst zwei benachbart zu einem Flugzeugheckspiegel 22 angeordnete und in Figur 6 gezeigte Kühler 10. In dem in den Figuren 13 und 14 veranschaulichten Betriebszustand des Flugzeugkühlsystems 100 steuert eine elektronische Steuereinheit 34 eine Fördereinheit 32 des Kühlsystems 100 derart, dass Luft aus der Flugzeugumgebung durch die in dem Matrixkörper 12 der Kühler 10 ausgebildete Kühlmittelkanäle 16 in einen Innenraum des Flugzeugrumpfs gesaugt wird. Nach dem Durchströmen des Matrixkörpers 12 der Kühler 10 wird die Luft zur direkten Kühlung einer wärmeerzeugenden Komponente an Bord des Flugzeugs genutzt und schließlich über eine im Bereich des Flugzeugheckspiegels 22 vorgesehenen Öffnung 36 wieder in die Flugzeugumgebung zurückgeführt. Zu diesem Zweck steuert die elektronische Steuereinheit 34 eine in den Figuren nicht veranschaulichte Klappe zur Festlegung des Strömungsquerschnitts der Öffnung 36 in eine geöffnete Stellung.

Im Gegensatz dazu schaltet die elektronische Steuereinheit 34 in dem in den Figuren 15 und 16 gezeigten Betriebszustand des Flugzeugkühlsystems 100 die Fördereinrichtung 32 aus. Ferner steuert die elektronische Steuereinheit 34 die die Öffnung 36 verschließende Klappe in eine geschlossene Position. Dadurch wird bewirkt, dass die Umgebungsluft die erste Matrixkörperoberfläche 18, die eine Außenfläche der Flugzeugaußenhaut bildet, überströmt, aber im Wesentlichen keine Durchströmung der in dem Matrixkörper 12 der Kühler 10 ausgebildeten Kühlmittelkanäle 16 stattfindet. Die Überströmung der ersten Matrixkörperoberfläche 18 wird jeweils durch die sich von der ersten Matrixkörperoberfläche 18 erstreckenden Rippen 30 gesteuert. Darüber hinaus schützen die Rippen 30 den Matrixkörper 12 der Kühler 10 vor äußeren Einflüssen.

Das in den Figuren 13 bis 16 gezeigte Flugzeugkühlsystem 100 wird im Bodenbetrieb des Flugzeugs in dem in den Figuren 13 und 14 gezeigten Betriebszustand betrieben. Im Flugbetrieb des Flugzeugs wird das Flugzeugkühlsystem 100 dagegen in dem in den Figuren 15 und 16 gezeigten Überströmbetrieb betrieben.

## Patentansprüche

1. Flugzeugkühlsystem (100) mit einem Kühler (10), der einen Matrixkörper (12) umfasst, in dem eine Mehrzahl von Kühlmittelkanälen (16) ausgebildet ist, die sich von einer ersten Oberfläche (18) des Matrixkörpers (12) zu einer zweiten Oberfläche (20) des Matrixkörpers (12) erstrecken, so dass der Matrixkörper (12) von einem Kühlmittel durchströmbar ist, wobei der Matrixkörper (12) des Kühlers (10) dazu eingerichtet ist, einen Abschnitt einer Flugzeugaußenhaut zu bilden,
**gekennzeichnet durch** eine Steuereinheit (34), die dazu eingerichtet ist, die Kühlmittelströmung **durch** die in dem Matrixkörper (12) des Kühlers (10) ausgebildeten Kühlmittelkanäle (16) zumindest in bestimmten Betriebsphasen des Flugzeugkühlsystems (100) derart zu steuern, dass das Kühlmittel im Bereich der ersten Oberfläche (18) des Matrixkörpers (12), die dazu eingerichtet ist, im in einem Flugzeug montierten Zustand des Kühlers (10) eine Außenfläche der Flugzeugaußenhaut zu bilden, in die in dem Matrixkörper (12) ausgebildeten Kühlmittelkanäle (16) eintritt, und im Bereich der zweiten Oberfläche (20) des Matrixkörpers (12), die dazu eingerichtet ist, im in einem Flugzeug montierten Zustand des Kühlers (10) eine Innenfläche der Flugzeugaußenhaut zu bilden, aus den in dem Matrixkörper (12) ausgebildeten Kühlmittelkanälen (16) austritt, und die ferner dazu eingerichtet ist, die Kühlmittelströmung **durch** die in dem Matrixkörper (12) des Kühlers (10) ausgebildeten Kühlmittelkanäle (16) zumindest in bestimmten Betriebsphasen des Flugzeugkühlsystems (100) derart zu steuern, dass das Kühlmittel im Bereich der zweiten Oberfläche (20) des Matrixkörpers (12), die dazu eingerichtet ist, im in einem Flugzeug montierten Zustand des Kühlers (10) eine Innenfläche der Flugzeugaußenhaut zu bilden, in die in dem Matrixkörper (12) ausgebildeten Kühlmittelkanäle (16) eintritt, und im Bereich der ersten Oberfläche (18) des Matrixkörpers (12), die dazu eingerichtet ist, im in einem Flugzeug montierten Zustand des Kühlers (10) eine Außenfläche der Flugzeugaußenhaut zu bilden, aus den in dem Matrixkörper (12) ausgebildeten Kühlmittelkanälen (16) austritt.

2. Flugzeugkühlsystem (100) nach Anspruch 1,
**dadurch gekennzeichnet, dass** der Matrixkörper (12) des Kühlers (10) eine Mehrzahl von Lamellen (14) umfasst, die die in dem Matrixkörper (12) ausgebildeten Kühlmittelkanäle (16) begrenzen, und/oder,
dass die erste Oberfläche (18) des Matrixkörpers (12) des Kühlers (10), dazu eingerichtet ist, im in einem Flugzeug montierten Zustand des Kühlers (10) eine Außenfläche der Flugzeugaußenhaut zu bilden und eine Struktur aufweist, die geeignet ist, im Flugbetrieb des Flugzeugs, wenn die erste Matrixkörperoberfläche (18) von Luft überströmt wird, den Reibungswiderstand der ersten Matrixkörperoberfläche (18) zu verringern, und/oder dass der Matrixkörper (12) des Kühlers (10) in Richtung der Kühlmittelströmung durch die in dem Matrixkörper (12) ausgebildeten Kühlmittelkanäle (16) mehrschichtig aufgebaut ist, und/oder dass der Matrixkörper (12) des Kühlers (10) dazu eingerichtet ist, einen im Bereich eines Hecks oder einer Belly Fairing des Flugzeugs angeordneten Flugzeugaußenhautabschnitt zu bilden.

3. Flugzeugkühlsystem (100) nach Anspruch 2,
**dadurch gekennzeichnet, dass** der Matrixkörper (12) des Kühlers (10) dazu eingerichtet ist, einen unteren und/oder einen oberen Bereich eines zu einem Heckspiegel (22) des Flugzeugs benachbarten Flugzeugaußenhautabschnitts zu bilden.

4. Flugzeugkühlsystem (100) nach einem der Ansprüche 1 bis 3,
**gekennzeichnet durch** eine Mehrzahl von Rippen (30), die sich von der ersten Oberfläche (18) des Matrixkörpers (12) erstrecken, die dazu eingerichtet ist, im in einem Flugzeug montierten Zustand des Kühlers (10) eine Außenfläche der Flugzeugaußenhaut zu bilden, wobei sich die Rippen (30) insbesondere im wesentlichen parallel zu Strömungslinien einer die erste Oberfläche (18) des Matrixkörpers (12) im Flugbetrieb des Flugszeugs überströmenden Luftströmung erstrecken und/oder wobei die Rippen (30) insbesondere eine in Richtung der ersten Oberfläche (18) des Matrixkörpers (12) gekrümmte Kontur aufweisen.

5. Flugzeugkühlsystem nach einem der Ansprüche 1 bis 4
**dadurch gekennzeichnet, dass** eine einen Innenraum eines Flugzeugrumpfs mit der Flugzeugumgebung verbindende Öffnung (36) dazu eingerichtet ist, in den Betriebsphasen des Flugzeugkühlsystems (100), in denen der Matrixkörper (12) des Kühlers (10) von der ersten Matrixkörperoberfläche (18) in Richtung der zweiten Matrixkörperoberfläche (20) von dem Kühlmittel durchströmt wird, als Kühlmittelauslass zu wirken, durch den das Kühlmittel nach dem Durchströmen des Matrixkörpers (12) in die Flugzeugumgebung zurückführbar ist, wobei die den Innenraum des Flugzeugrumpfs mit der Flugzeugumgebung verbindende Öffnung (36) insbesondere in einem Bereich der Flugzeugaußenhaut angeordnet ist, auf den im Flugbetrieb des Flugzeugs ein geringerer Druck wirkt als auf den durch den Matrixkörper (12) des Kühlers (10) gebildeten Flugzeugaußenhautabschnitt.

6. Flugzeugkühlsystem nach Anspruch 5,
**dadurch gekennzeichnet, dass** die den Innenraum des Flugzeugrumpfs mit der Flugzeugumgebung verbindende Öffnung (36) im Bereich eines Heckspiegels (22) des Flugzeugs, im Bereich einer von einem Heck des Flugzeugs abgewandten Kante (40) eines Flugzeugseitenleitwerks (42) und/oder im Bereich einer Belly Fairing des Flugzeugs angeordnet ist.

7. Flugzeugkühlsystem nach einem der Ansprüche 1 bis 6,
**dadurch gekennzeichnet, dass** eine einen Innenraum eines Flugzeugrumpfs mit der Flugzeugumgebung verbindende Öffnung (36) dazu eingerichtet ist, in den Betriebsphasen des Flugzeugkühlsystems (100), in denen der Matrixkörper (12) des Kühlers (10) von der zweiten Matrixkörperoberfläche (20) in Richtung der ersten Matrixkörperoberfläche (18) von dem Kühlmittel durchströmt wird, als Kühlmitteleinlass zu wirken, durch den das Kühlmittel vor dem Durchströmen des Matrixkörpers (12) aus der Flugzeugumgebung entnehmbar ist, wobei die den Innenraum des Flugzeugrumpfs mit der Flugzeugumgebung verbindende Öffnung (36) insbesondere im Bereich eines Heckspiegels (22) des Flugzeugs, im Bereich einer von einem Heck des Flugzeugs abgewandten Kante (40) eines Flugzeugseitenleitwerks (42) und/oder im Bereich einer Belly Fairing des Flugzeugs angeordnet ist.

8. Flugzeugkühlsystem nach einem der Ansprüche 1 bis 7,
**gekennzeichnet durch** eine Steuereinheit (34), die dazu eingerichtet ist, **durch** eine entsprechende Steuerung der Position einer Klappe, die einen Strömungsquerschnitt einer den Innenraum des Flugzeugrumpfs mit der Flugzeugumgebung verbindenden Öffnung (36) festlegt, einen die Öffnung (36) durchströmenden Kühlmittelvolumenstrom und/oder einen im Flugbetrieb des Flugzeugs **durch** die Klappe verursachten Luftwiderstand zu steuern, und/oder **durch** eine Steuereinheit (34), die dazu eingerichtet ist, die Kühlmittelströmung derart zu steuern, dass zumindest in bestimmten Betriebsphasen des Flugzeugkühlsystems (100) die erste Oberfläche (18) des Matrixkörpers (12), die dazu eingerichtet ist, im in einem Flugzeug montierten Zustand des Kühlers (10) eine Außenfläche der Flugzeugaußenhaut zu bilden, von dem Kühlmittel überströmt wird, wobei die Steuereinheit (34) insbesondere dazu eingerichtet ist, in den Betriebsphasen des Flugzeugkühlsystems (100), in denen die erste Matrixkörperoberfläche (18) von dem Kühlmittel überströmt wird, eine einen Innenraum eines Flugzeugrumpfs mit der Flugzeugumgebung verbindende Öffnung (36) zu verschließen, die in Betriebsphasen des Flugzeugkühlsystems (100), in denen der Matrixkörper (12) des Kühlers (10) von dem Kühlmittel durchströmt wird, als Kühlmittelauslass oder als Kühlmitteleinlass wirkt.

9. Flugzeugkühlsystem nach Anspruch 8,
**dadurch gekennzeichnet, dass** die Steuereinheit (34) dazu eingerichtet ist, in den Betriebsphasen des Flugzeugkühlsystems (100), in denen die erste Matrixkörperoberfläche (18) von dem Kühlmittel überströmt wird, eine Fördereinrichtung (32) auszuschalten, die in Betriebsphasen des Flugzeugkühlsystems (100), in denen der Matrixkörper (12) des Kühlers (10) von dem Kühlmittel durchströmt wird, dazu dient, Kühlmittel durch die in dem Matrixkörper (12) des Kühlers (10) ausgebildeten Kühlmittelkanäle (16) zu fördern.

10. Verfahren zum Betreiben eines Flugzeugkühlsystems (100), bei dem ein Matrixkörper (12) eines Kühlers (10), in dem eine Mehrzahl von Kühlmittelkanälen (16) ausgebildet ist, die sich von einer ersten Oberfläche (18) des Matrixkörpers (12) zu einer zweiten Oberfläche (20) des Matrixkörpers (12) erstrecken, und der dazu eingerichtet ist, einen Abschnitt einer Flugzeugaußenhaut zu bilden, zumindest in bestimmten Betriebsphasen des Flugzeugkühlsystems (100) von einem Kühlmittel durchströmt wird,
**dadurch gekennzeichnet, dass** die Kühlmittelströmung durch die in dem Matrixkörper (12) des Kühlers (10) ausgebildeten Kühlmittelkanäle (16) zumindest in bestimmten Betriebsphasen des Flugzeugkühlsystems (100) derart gesteuert wird, dass das Kühlmittel im Bereich der ersten Oberfläche (18) des Matrixkörpers (12), die dazu eingerichtet ist, im in einem Flugzeug montierten Zustand des Kühlers (10) eine Außenfläche der Flugzeugaußenhaut zu bilden, in die in dem Matrixkörper (12) ausgebildeten Kühlmittelkanäle (10) eintritt, und im Bereich der zweiten Oberfläche (20) des Matrixkörpers (12), die dazu eingerichtet ist, im in einem Flugzeug montierten Zustand des Kühlers (10) eine Innenfläche der Flugzeugaußenhaut zu bilden, aus den in dem Matrixkörper (12) ausgebildeten Kühlmittelkanälen (16) austritt, und dass die Kühlmittelströmung durch die in dem Matrixkörper (12) des Kühlers (10) ausgebildeten Kühlmittelkanäle (16) zumindest in bestimmten Betriebsphasen des Flugzeugkühlsystems (100) derart gesteuert wird, dass das Kühlmittel im Bereich der zweiten Oberfläche (20) des Matrixkörpers (12), die dazu eingerichtet ist, im in einem Flugzeug montierten Zustand des Kühlers (10) eine Innenfläche der Flugzeugaußenhaut zu bilden, in die in dem Matrixkörper (12) ausgebildeten Kühlmittelkanäle (16) eintritt, und im Bereich der ersten Oberfläche (18) des Matrixkörpers (12), die dazu eingerichtet ist, im in einem Flugzeug montierten Zustand des Kühlers (10) eine Außenfläche der Flugzeugaußenhaut zu bilden, aus den in dem Matrixkörper (12) ausgebildeten Kühlmittelkanälen (16) austritt.

11. Verfahren nach Anspruch 10,
**dadurch gekennzeichnet, dass** die Kühlmittelströmung nach dem Durchströmen des Matrixkörpers (12) des Kühlers (10) durch eine einen Innenraum eines Flugzeugrumpfs mit der Flugzeugumgebung verbindende und als Kühlmittelauslass wirkende Öffnung (36) in die Flugzeugumgebung zurückgeführt wird, wobei auf die den Innenraum des Flugzeugrumpfs mit der Flugzeugumgebung verbindende und als Kühlmittelauslass wirkende Öffnung (36) im Flugbetrieb des Flugzeugs vorzugsweise ein geringerer Druck wirkt als auf den durch den Matrixkörper (12) des Kühlers (10) gebildeten Flugzeugaußenhautabschnitt.

12. Verfahren nach einem der Ansprüche 10 oder 11,
**dadurch gekennzeichnet, dass** die Kühlmittelströmung vor dem Durchströmen des Matrixkörpers (12) des Kühlers (10) durch eine einen Innenraum eines Flugzeugrumpfs mit der Flugzeugumgebung verbindende und als Kühlmitteleinlass wirkende Öffnung (36) aus der Flugzeugumgebung entnommen wird.

13. Verfahren nach einem der Ansprüche 10 bis 12,
**dadurch gekennzeichnet, dass** durch eine entsprechende Steuerung der Position einer Klappe, die einen Strömungsquerschnitt einer den Innenraum des Flugzeugrumpfs mit der Flugzeugumgebung verbindenden Öffnung (36) festlegt, ein die Öffnung (36) durchströmender Kühlmittelvolumenstrom und/oder ein im Flugbetrieb des Flugzeugs durch die Klappe verursachter Luftwiderstand gesteuert wird, und/oder zumindest in bestimmten Betriebsphasen des Flugzeugkühlsystems (100) die erste Oberfläche (18) des Matrixkörpers (12), die dazu eingerichtet ist, im in einem Flugzeug montierten Zustand des Kühlers (10) eine Außenfläche der Flugzeugaußenhaut zu bilden, von dem Kühlmittel überströmt wird, wobei in den Betriebsphasen des Flugzeugkühlsystems (100), in denen die erste Matrixkörperoberfläche (18) von dem Kühlmittel überströmt wird, vorzugsweise eine einen Innenraum eines Flugzeugrumpfs mit der Flugzeugumgebung verbindende Öffnung (36) verschlossen wird, die in Betriebsphasen des Flugzeugkühlsystems (100), in denen der Matrixkörper (12) des Kühlers (10) von dem Kühlmittel durchströmt wird, als Kühlmittelauslass oder als Kühlmitteleinlass wirkt.

14. Verfahren nach Anspruch 13,
**dadurch gekennzeichnet, dass** in den Betriebsphasen des Flugzeugkühlsystems (100), in denen die erste Matrixkörperoberfläche (18) von dem Kühlmittel überströmt wird, eine Fördereinrichtung (32) ausgeschaltet ist, die in Betriebsphasen des Flugzeugkühlsystems (100), in denen der Matrixkörper (12) des Kühlers (10) von dem Kühlmittel durchströmt wird, dazu dient, Kühlmittel durch die in dem Matrixkörper (12) des Kühlers (10) ausgebildeten Kühlmittelkanäle (16) zu fördern.

15. Verfahren nach einem der Ansprüche 13 oder 14,
**dadurch gekennzeichnet, dass** in den Betriebsphasen des Flugzeugkühlsystems (100), in denen die erste Matrixkörperoberfläche (18) von dem Kühlmittel überströmt wird, die Kühlmittelströmung über die erste Matrixkörperoberfläche (18) durch eine Mehrzahl von Rippen (30) gesteuert wird, die sich von der ersten Matrixkörperoberfläche (18) erstrecken.

## Claims

1. Aircraft cooling system (100) having a cooler (10), comprising a matrix body (12) in which a plurality of coolant channels (16) are formed and extend from a first surface (18) of the matrix body (12) to a second surface (20) of the matrix body (12), allowing a coolant to flow through the matrix body (12), the matrix body (12) of the cooler (10) being designed to form a section of an aircraft outer skin, **characterised by** a control unit (34) which is designed to control the coolant flow through the coolant channels (16) formed in the matrix body (12) of the cooler (10), at least in certain operating phases of the aircraft cooling system (100), in such a way that the coolant in the region of the first surface (18) of the matrix body (12), which surface in the state of the cooler (10) mounted in an aircraft is designed to form an outer surface of the aircraft outer skin, passes into the coolant channels (16) formed in the matrix body (12), and in the region of the second surface (20) of the matrix body (12), which surface in the state of the cooler (10) mounted in an aircraft is designed to form an inner surface of the aircraft outer skin, passes out of the coolant channels (16) formed in the matrix body (12), and which is furthermore designed to control the coolant flow through the coolant channels (16) formed in the matrix body (12) of the cooler (10), at least in certain operating phases of the aircraft cooling system (100), in such a way that the coolant in the region of the second surface (20) of the matrix body (12), which surface in the state of the cooler (10) mounted in an aircraft is designed to form an inner surface of the aircraft outer skin, passes into the coolant channels (16) formed in the matrix body (12), and in the region of the first surface (18) of the matrix body (12), which surface in the state of the cooler (10) mounted in an aircraft is designed to form an outer surface of the aircraft outer skin, passes out of the coolant channels (16) formed in the matrix body (12).

2. Aircraft cooling system (100) according to Claim 1,
**characterised in that** the matrix body (12) of the cooler (10) comprises a plurality of lamellae (14) delimiting the coolant channels (16) formed in the matrix body (12), and/or that the first surface (18) of the matrix body (12) of the cooler (10) is designed to form, in the state of the cooler (10) mounted in an aircraft, an outer surface of the aircraft outer skin and has a structure which is suitable for reducing the frictional drag of the first matrix body surface (18) when air is flowing over the first matrix body surface (18) while the aircraft is flying, and/or that the matrix body (12) of the cooler (10) is of multilayer construction in the direction of the coolant flow through the coolant channels (16) formed in the matrix body (12), and/or that the matrix body (12) of the cooler (10) is designed to form an aircraft outer skin section arranged in the region of a tail or a belly fairing of the aircraft.

3. Aircraft cooling system (100) according to Claim 2,
**characterised in that** the matrix body (12) of the cooler (10) is designed to form a lower and/or an upper region of an aircraft outer skin section adjacent to a tail end (22) of the aircraft.

4. Aircraft cooling system (100) according to one of Claims 1 to 3,
**characterised by** a plurality of ribs (30) extending from the first surface (18) of the matrix body (12) which is designed to form, in the state of the cooler (10) mounted in an aircraft, an outer surface of the aircraft outer skin, wherein the ribs (30) in particular extend substantially parallel to flow lines of an air flow flowing over the first surface (18) of the matrix body (12) while the aircraft is flying and/or wherein the ribs (30) in particular have a contour curved in the direction of the first surface (18) of the matrix body (12).

5. Aircraft cooling system according to one of Claims 1 to 4,
**characterised in that** an opening (36) connecting an interior of an aircraft fuselage to the aircraft environment is designed to act, in the operating phases of the aircraft cooling system (100) in which the coolant flows through the matrix body (12) of the cooler (10) from the first matrix body surface (18) in the direction of the second matrix body surface (20), as a coolant outlet, through which the coolant can be led back into the aircraft environment after flowing through the matrix body (12), wherein the opening (36) connecting the interior of the aircraft fuselage to the aircraft environment in particular is arranged in a region of the aircraft outer skin on which, while the aircraft is flying, a lower pressure acts than on the aircraft outer skin section formed by the matrix body (12) of the cooler (10).

6. Aircraft cooling system according to Claim 5,
**characterised in that** the opening (36) connecting the interior of the aircraft fuselage to the aircraft environment is arranged in the region of a tail end (22) of the aircraft, in the region of an edge (40), facing away from a tail of the aircraft, of an aircraft rudder unit (42) and/or in the region of a belly fairing of the aircraft.

7. Aircraft cooling system according to one of Claims 1 to 6,
**characterised in that** an opening (36) connecting an interior of an aircraft fuselage to the aircraft environment in particular is designed to act, in the operating phases of the aircraft cooling system (100) in which the coolant flows through the matrix body (12) of the cooler (10) from the second matrix body surface (20) in the direction of the first matrix body surface (18), as a coolant inlet, through which the coolant can be withdrawn from the aircraft environment before flowing through the matrix body (12), wherein the opening (36) connecting the interior of the aircraft fuselage to the aircraft environment in particular is arranged in the region of a tail end (22) of the aircraft, in the region of an edge (40), facing away from a tail of the aircraft, of an aircraft rudder unit (42) and/or in the region of a belly fairing of the aircraft.

8. Aircraft cooling system according to one of Claims 1 to 7,
**characterised by** a control unit (34) which is designed to control, by appropriate control of the position of a flap defining a flow cross-section of an opening (36) connecting the interior of the aircraft fuselage to the aircraft environment, a coolant volume flow flowing through the opening (36) and/or an aerodynamic drag caused by the flap while the aircraft is flying, and/or by a control unit (34) which is designed to control the coolant flow in such a way that, at least in certain operating phases of the aircraft cooling system (100), the coolant flows over the first surface (18) of the matrix body (12), which surface is designed to form in the state of the cooler (10) mounted in an aircraft an outer surface of the aircraft outer skin, wherein the control unit (34) in particular is designed to close, in the operating phases of the aircraft cooling system (100) in which the coolant flows over the first matrix body surface (18), an opening (36) connecting an interior of an aircraft fuselage to the aircraft environment and acting as a coolant outlet or as a coolant inlet in operating phases of the aircraft cooling system (100) in which the coolant flows through the matrix body (12) of the cooler (10).

9. Aircraft cooling system according to Claim 8,
**characterised in that** the control unit (34) is designed to switch off, in the operating phases of the aircraft cooling system (100) in which the coolant flows over the first matrix body surface (18), a conveying device which serves to convey, in operating phases of the aircraft cooling system (100) in which the coolant flows through the matrix body (12) of the cooler (10), coolant through the coolant channels (16) formed in the matrix body (12) of the cooler (10).

10. Method for operating an aircraft cooling system (100), wherein at least in certain operating phases of the aircraft cooling system (100), a coolant flows through a matrix body (12) of a cooler (10), in which a plurality of coolant channels (16) are formed and extend from a first surface (18) of the matrix body (12) to a second surface (20) of the matrix body (12), and which is designed to form a section of an aircraft outer skin,
**characterised in that** the coolant flow through the coolant channels (16) formed in the matrix body (12) of the cooler (10) is controlled, at least in certain operating phases of the aircraft cooling system (100), in such a way that the coolant in the region of the first surface (18) of the matrix body (12), which surface in the state of the cooler (10) mounted in an aircraft is designed to form an outer surface of the aircraft outer skin, passes into the coolant channels (16) formed in the matrix body (12), and in the region of the second surface (20) of the matrix body (12), which surface in the state of the cooler (10) mounted in an aircraft is designed to form an inner surface of the aircraft outer skin, passes out of the coolant channels (16) formed in the matrix body (12), and **in that** the coolant flow through the coolant channels (16) formed in the matrix body (12) of the cooler (10) is controlled, at least in certain operating phases of the aircraft cooling system (100), in such a way that the coolant in the region of the second surface (20) of the matrix body (12), which surface in the state of the cooler (10) mounted in an aircraft is designed to form an inner surface of the aircraft outer skin, passes into the coolant channels (16) formed in the matrix body (12), and in the region of the first surface (18) of the matrix body (12), which surface in the state of the cooler (10) mounted in an aircraft is designed to form an outer surface of the aircraft outer skin, passes out of the coolant channels (16) formed in the matrix body (12).

11. Method according to Claim 10,
**characterised in that** the coolant flow, after flowing through the matrix body (12) of the cooler (10), is led back into the aircraft environment through an opening (36) connecting an interior of an aircraft fuselage to the aircraft environment and acting as a coolant outlet, wherein preferably a lower pressure acts on the opening (36) connecting the interior of the aircraft fuselage to the aircraft environment and acting as a coolant outlet, while the aircraft is flying, than on the aircraft outer skin section formed by the matrix body (12) of the cooler (10).

12. Method according to one of Claims 10 or 11,
**characterised in that** the coolant flow is withdrawn from the aircraft environment, before flowing through the matrix body (12) of the cooler (10), through an opening (36) connecting an interior of an aircraft fuselage to the aircraft environment and acting as a coolant inlet.

13. Method according to one of Claims 10 to 12,
**characterised in that**, by appropriate control of the position of a flap defining a flow cross-section of an opening (36) connecting the interior of the aircraft fuselage to the aircraft environment, a coolant volume flow flowing through the opening (36) and/or an aerodynamic drag caused by the flap while the aircraft is flying is controlled, and/or at least in certain operating phases of the aircraft cooling system (100), the coolant flows over the first surface (18) of the matrix body (12), which surface is designed to form in the state of the cooler (10) mounted in an aircraft an outer surface of the aircraft outer skin, wherein in the operating phases of the aircraft cooling system (100) in which the coolant flows over the first matrix body surface (18), preferably an opening (36) connecting an interior of an aircraft fuselage to the aircraft environment and acting as a coolant outlet or as a coolant inlet in operating phases of the aircraft cooling system (100) in which the coolant flows through the matrix body (12) of the cooler (10) is closed.

14. Method according to Claim 13,
**characterised in that**, in the operating phases of the aircraft cooling system (100) in which the coolant flows over the first matrix body surface (18), a conveying device (32) which serves to convey, in operating phases of the aircraft cooling system (100) in which the coolant flows through the matrix body (12) of the cooler (10), coolant through the coolant channels (16) formed in the matrix body (12) of the cooler (10) is switched off.

15. Method according to one of Claims 13 or 14,
**characterised in that**, in the operating phases of the aircraft cooling system (100) in which the coolant flows over the first matrix body surface (18), the coolant flow over the first matrix body surface (18) is controlled by a plurality of ribs (30) extending from the first matrix body surface (18).

## Revendications

1. Système de refroidissement d'avion (100) pourvu d'un dispositif de refroidissement (10) comprenant un corps de matrice (12), dans lequel est réalisée une pluralité de canaux à fluide de refroidissement (16) qui s'étendent d'une première surface (18) du corps de matrice (12) vers une seconde surface (20) du corps de matrice (12) si bien que le corps de matrice (12) peut être traversé par un fluide de refroidissement, le corps de matrice (12) du dispositif de refroidissement (10) étant conçu pour former une section de l'enveloppe extérieure de l'avion,
**caractérisé par** une unité de commande (34) qui est conçue pour commander, au moins pendant certaines phases de fonctionnement du système de refroidissement d'avion (100), le flux de fluide de refroidissement à travers les canaux à fluide de refroidissement (16) réalisés dans le corps de matrice (12) du dispositif de refroidissement (10) de telle sorte que le fluide de refroidissement pénètre dans les canaux à fluide de refroidissement (16) réalisés dans le corps de matrice (12) au niveau de la première surface (18) du corps de matrice (12) conçue pour former une surface extérieure de l'enveloppe extérieure de l'avion une fois le dispositif de refroidissement (10) installé dans l'avion, et sort des canaux à fluide de refroidissement (16) réalisés dans le corps de matrice (12) au niveau de la seconde surface (20) du corps de matrice (12) conçue pour former une surface intérieure de l'enveloppe extérieure de l'avion une fois le dispositif de refroidissement (10) installé dans l'avion, et qui est en outre conçue pour commander, au moins pendant certaines phases de fonctionnement du système de refroidissement d'avion (100), le flux de fluide de refroidissement à travers les canaux à fluide de refroidissement (16) réalisés dans le corps de matrice (12) du dispositif de refroidissement (10) de telle sorte que le fluide de refroidissement pénètre dans les canaux à fluide de refroidissement (16) réalisés dans le corps de matrice (12) au niveau de la seconde surface (20) du corps de matrice (12) conçue pour former une surface intérieure de l'enveloppe extérieure de l'avion une fois le dispositif de refroidissement (10) installé dans l'avion, et sort des canaux à fluide de refroidissement (16) réalisés dans le corps de matrice (12) au niveau de la première surface (18) du corps de matrice (12) conçue pour former une surface extérieure de l'enveloppe extérieure de l'avion une fois le dispositif de refroidissement (10) installé dans l'avion.

2. Système de refroidissement d'avion (100) selon la revendication 1,
**caractérisé en ce que** le corps de matrice (12) du dispositif de refroidissement (10) comporte une pluralité de lamelles (14) qui délimitent les canaux à fluide refroidissement (16) réalisés dans le corps de matrice (12), et/ou
**en ce que** la première surface (18) du corps de matrice (12) du dispositif de refroidissement (10) est conçue pour former une surface extérieure de l'enveloppe extérieure de l'avion une fois le dispositif de refroidissement installé dans l'avion, et présente une structure appropriée pour réduire pendant le vol la résistance à la friction de la première surface (18) du corps de matrice lorsque l'air afflue sur la première surface (18) du corps de matrice, et/ou **en ce que** le corps de matrice (12) du dispositif de refroidissement (10) présente une structure multicouches dans la direction du flux de fluide de refroidissement à travers les canaux à fluide de refroidissement (16) réalisés dans le corps de matrice (12), et/ou **en ce que** le corps de matrice (12) du dispositif de refroidissement (10) est conçu pour former une section de l'enveloppe extérieure de l'avion située dans la partie arrière ou dans la partie du carénage ventrale de l'avion.

3. Système de refroidissement d'avion (100) selon la revendication 2,
**caractérisé en ce que** le corps de matrice (12) du dispositif de refroidissement (10) est conçu pour former une partie inférieure et/ou une partie supérieure d'une section de l'enveloppe extérieure de l'avion adjacente à la partie arrière de l'avion.

4. Système de refroidissement d'avion (100) selon l'une des revendications 1 à 3,
**caractérisé par** une pluralité d'ailettes (30) qui s'étendent de la première surface (18) du corps de matrice (12) conçue pour former une surface extérieure de l'enveloppe extérieure de l'avion une fois le dispositif de refroidissement (10) installé dans l'avion, lesdites ailettes (30) s'étendant en particulier pour l'essentiel parallèlement aux lignes de flux d'un flux d'air affluant sur la première surface (18) du corps de matrice (12) pendant le vol et/ou les ailettes (30) présentant en particulier un contour courbé dans la direction de la première surface (18) du corps de matrice (12).

5. Système de refroidissement d'avion selon l'une des revendications 1 à 4,
**caractérisé en ce qu'**une ouverture (36) reliant un espace intérieur d'un fuselage d'avion à l'environnement de l'avion est conçue pour servir de sortie de fluide de refroidissement par laquelle le fluide de refroidissement peut, dans les phases de fonctionnement du système de refroidissement d'avion (100) dans le cadre desquelles le corps de matrice (12) du dispositif de refroidissement (10) est traversé par le fluide de refroidissement circulant de la première surface (18) du corps de matrice vers la seconde surface (20) du corps de matrice, être ramené et rejeté dans l'environnement de l'avion après avoir traversé le corps de matrice (12), ladite ouverture (36) reliant l'espace intérieur d'un fuselage d'avion à l'environnement de l'avion étant située en particulier dans une zone de l'enveloppe extérieure de l'avion sur laquelle il est exercé pendant le vol une pression plus faible que celle agissant sur la section de l'enveloppe extérieure d'avion formée par le corps de matrice (12) du dispositif de refroidissement (10).

6. Système de refroidissement d'avion selon la revendication 5,
**caractérisé en ce que** l'ouverture (36) reliant l'espace intérieur d'un fuselage d'avion à l'environnement de l'avion est située dans la zone de la partie arrière (22) de l'avion, dans la zone d'une arête (40) d'une dérive (42) éloignée de la partie arrière de l'avion et/ou dans la zone du carénage ventral de l'avion.

7. Système de refroidissement d'avion selon l'une des revendications 1 à 6,
**caractérisé en ce qu'**une ouverture (36) reliant un espace intérieur d'un fuselage d'avion à l'environnement de l'avion est conçue pour servir d'admission de fluide de refroidissement par laquelle le fluide de refroidissement peut, dans les phases de fonctionnement du système de refroidissement d'avion (100) dans le cadre desquelles le corps de matrice (12) du dispositif de refroidissement (10) est traversé par le fluide de refroidissement circulant de la première surface (18) du corps de matrice vers la seconde surface (20) du corps de matrice, être prélevé dans l'environnement de l'avion avant de traverser le corps de matrice (12), ladite ouverture (36) reliant l'espace intérieur d'un fuselage d'avion à l'environnement de l'avion étant située en particulier dans la zone de la partie arrière (22) de l'avion, dans la zone d'une arête (40) d'une dérive (42) éloignée de la partie arrière de l'avion et/ou dans la zone du carénage ventral de l'avion.

8. Système de refroidissement d'avion selon l'une des revendications 1 à 7,
**caractérisé par** une unité de commande (34) qui est conçue pour commander, par le biais d'une commande correspondante de la position d'un clapet qui détermine la section d'écoulement de l'ouverture (36) reliant l'espace intérieur du fuselage à l'environnement de l'avion, un débit volumique du fluide de refroidissement à travers l'ouverture (36) et/ou une résistance aérodynamique engendrée par ledit clapet pendant le vol, et/ou par une unité de commande (34) conçue pour commander le flux de fluide de refroidissement de telle sorte qu'au moins dans certaines phases de fonctionnement du système de refroidissement d'avion (100), le fluide de refroidissement afflue sur la première surface (18) du corps de matrice (12) conçue pour former une surface extérieure de l'enveloppe extérieure de l'avion une fois le dispositif de refroidissement (10) installé dans l'avion, l'unité de commande (34) étant conçue en particulier pour fermer une ouverture (36) reliant un espace intérieur d'un fuselage d'avion à l'environnement de l'avion dans les phases de fonctionnement du système de refroidissement d'avion (100) dans le cadre desquelles le fluide de refroidissement afflue sur la première surface (18) du corps de matrice et servant de sortie ou d'admission de fluide de refroidissement dans les phases de fonctionnement du système de refroidissement d'avion (100) dans le cadre desquelles le corps de matrice (12) du dispositif de refroidissement (10) est traversé par le fluide de refroidissement.

9. Système de refroidissement d'avion selon la revendication 8,
**caractérisé en ce que** l'unité de commande (34) est conçue de manière à pouvoir, dans les phases de fonctionnement du système de refroidissement d'avion (100) dans le cadre desquelles le fluide de refroidissement afflue sur la première surface (18) du corps de matrice (12), mettre hors circuit un dispositif d'acheminement (32) qui sert à acheminer le fluide de refroidissement à travers les canaux à fluide de refroidissement (16) réalisées dans le corps de matrice (12) du dispositif de refroidissement (10), dans les phases de fonctionnement du système de refroidissement d'avion (100) dans le cadre desquelles le corps de matrice (12) du dispositif de refroidissement (10) est traversé par le fluide de refroidissement.

10. Procédé permettant de faire fonctionner un système de refroidissement d'avion (100), dans le cadre duquel un corps de matrice (12) d'un dispositif de refroidissement (10), dans lequel est réalisée une pluralité de canaux à fluide de refroidissement (16) qui s'étendent d'une première surface (18) du corps de matrice (12) vers une seconde surface (20) du corps de matrice (12) et lequel est conçu pour former une section de l'enveloppe extérieure de l'avion, est traversé par un fluide de refroidissement au moins pendant certaines phases de fonctionnement du système de refroidissement d'avion (100),
**caractérisé en ce que** le flux de fluide de refroidissement à travers les canaux à fluide de refroidissement (16) réalisés dans le corps de matrice (12) du dispositif de refroidissement (10) est, au moins pendant certaines phases de fonctionnement du système de refroidissement d'avion (100), commandé de telle sorte que le fluide de refroidissement pénètre dans les canaux à fluide de refroidissement (16) réalisés dans le corps de matrice (12) au niveau de la première surface (18) du corps de matrice (12) conçue pour former une surface extérieure de l'enveloppe extérieure de l'avion une fois le dispositif de refroidissement (10) installé dans l'avion, et sort des canaux à fluide de refroidissement (16) réalisés dans le corps de matrice (12) au niveau de la seconde surface (20) du corps de matrice (12) conçue pour former une surface intérieure de l'enveloppe extérieure de l'avion une fois le dispositif de refroidissement (10) installé dans l'avion, et que le flux de fluide de refroidissement à travers les canaux à fluide de refroidissement (16) réalisés dans le corps de matrice (12) du dispositif de refroidissement (10) est, au moins pendant certaines phases de fonctionnement du système de refroidissement d'avion (100), commandé de telle sorte que le fluide de refroidissement pénètre dans les canaux à fluide de refroidissement (16) réalisés dans le corps de matrice (12) au niveau de la seconde surface (20) du corps de matrice (12) conçue pour former une surface intérieure de l'enveloppe extérieure de l'avion une fois le dispositif de refroidissement (10) installé dans l'avion, et sort des canaux à fluide de refroidissement (16) réalisés dans le corps de matrice (12) au niveau de la première surface (18) du corps de matrice (12) conçue pour former une surface extérieure de l'enveloppe extérieure de l'avion une fois le dispositif de refroidissement (10) installé dans l'avion.

11. Procédé selon la revendication 10,
**caractérisé en ce que** le flux de fluide de refroidissement est, après avoir traversé le corps de matrice (12) du dispositif de refroidissement (10), ramené et rejeté dans l'environnement de l'avion par une ouverture (36) reliant l'espace intérieur d'un fuselage d'avion à l'environnement de l'avion et servant de sortie de fluide de refroidissement, la pression exercée sur l'ouverture (36) reliant l'espace intérieur d'un fuselage d'avion à l'environnement de l'avion et servant de sortie de fluide de refroidissement étant de préférence plus faible que celle exercée sur la section de l'enveloppe extérieure formée par le corps de matrice (12) du dispositif de refroidissement (10).

12. Procédé selon l'une des revendications 10 ou 11,
**caractérisé en ce que** le flux de fluide de refroidissement est, avant de traverser le corps de matrice (12) du dispositif de refroidissement (10), prélevé dans l'environnement de l'avion par une ouverture (36) reliant l'espace intérieur d'un fuselage d'avion à l'environnement de l'avion et servant d'admission de fluide de refroidissement.

13. Procédé selon l'une des revendications 10 à 12,
**caractérisé en ce qu'**il y a, par le biais d'une commande correspondante de la position d'un clapet qui détermine la section d'écoulement d'une ouverture (36) reliant l'espace intérieur du fuselage de l'avion à l'environnement de l'avion, commande d'un débit volumique de fluide de refroidissement passant à travers l'ouverture (36) et/ou une résistance aérodynamique engendrée par ledit clapet pendant le vol, et/ou qu'au moins pendant certaines phases de fonctionnement du système de refroidissement (100), le fluide de refroidissement afflue sur la première surface (18) du corps de matrice (12) conçue pour former une surface extérieure de l'enveloppe extérieure de l'avion une fois le dispositif de refroidissement installé dans l'avion, une ouverture (36), qui relie l'espace intérieur d'un fuselage d'avion à l'environnement de l'avion et qui agit comme une sortie ou comme une admission de fluide de refroidissement dans les phases de fonctionnement du système de refroidissement d'avion (100) dans le cadre desquelles le corps de matrice (12) du dispositif de refroidissement (10) est traversé par le fluide de refroidissement, étant de préférence fermée dans les phases de fonctionnement du système de refroidissement (100) dans le cadre desquelles le fluide de refroidissement afflue sur la première surface (18) du corps de matrice.

14. Procédé selon la revendication 13,
**caractérisé en ce que** dans les phases de fonctionnement du système de refroidissement d'avion (100) dans le cadre desquelles le fluide de refroidissement afflue sur la première surface (18) du corps de matrice, un dispositif d'acheminement servant à acheminer le fluide de refroidissement à travers les canaux à fluide de refroidissement réalisés dans le corps de matrice (12) du dispositif de refroidissement (10) est mis hors circuit dans les phases de fonctionnement du système de refroidissement d'avion (100) dans le cadre desquelles le corps de matrice (12) du dispositif de refroidissement (10) est traversé par le fluide de refroidissement.

15. Procédé selon l'une des revendications 13 ou 14,
**caractérisé en ce que** dans les phases de fonctionnement du système de refroidissement d'avion (100) dans le cadre desquelles le fluide de refroidissement afflue sur la première surface (18) du corps de matrice, le flux de fluide de refroidissement est amené sur la première surface (18) du corps de matrice par une pluralité d'ailettes (30) qui s'étendent depuis cette première surface (18).
